(19) Europäisches Patentamt
European Patent Office
Office européen des brevets

(11) **EP 3 452 217 B1**

(12) **EUROPÄISCHE PATENTSCHRIFT**

(45) Veröffentlichungstag und Bekanntmachung des Hinweises auf die Patenterteilung:
**20.07.2022 Patentblatt 2022/29**

(21) Anmeldenummer: **17719615.1**

(22) Anmeldetag: **27.04.2017**

(51) Internationale Patentklassifikation (IPC):
**B01L 3/00** *(2006.01)* **F16K 99/00** *(2006.01)*

(52) Gemeinsame Patentklassifikation (CPC):
**B01L 3/502723; F16K 99/0061; F16K 99/0063;**
B01L 2200/0621; B01L 2400/0409;
B01L 2400/0442; B01L 2400/049; B01L 2400/0688;
B01L 2400/084; F16K 2099/0084

(86) Internationale Anmeldenummer:
**PCT/EP2017/060075**

(87) Internationale Veröffentlichungsnummer:
**WO 2017/191032 (09.11.2017 Gazette 2017/45)**

(54) **FLUIDHANDHABUNGSVORRICHTUNG UND VERFAHREN ZUR FLUIDHANDHABUNG**

FLUID HANDLING DEVICE AND METHOD FOR FLUID HANDLING

DISPOSITIF DE MANIPULATION DE FLUIDE ET PROCÉDÉ DE MANIPULATION DE FLUIDE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **06.05.2016 DE 102016207845**

(43) Veröffentlichungstag der Anmeldung:
**13.03.2019 Patentblatt 2019/11**

(73) Patentinhaber: **Hahn-Schickard-Gesellschaft für angewandte Forschung e.V.**
**78052 Villingen-Schwenningen (DE)**

(72) Erfinder:
• **CZILWIK, Gregor**
**79104 Freiburg (DE)**
• **KELLER, Mark**
**79108 Freiburg (DE)**
• **PAUST, Nils**
**79115 Freiburg im Breisgau (DE)**
• **HUTZENLAUB, Tobias**
**79336 Herbolzheim (DE)**

(74) Vertreter: **Stöckeler, Ferdinand et al**
**Schoppe, Zimmermann, Stöckeler Zinkler, Schenk & Partner mbB**
**Patentanwälte**
**Radlkoferstrasse 2**
**81373 München (DE)**

(56) Entgegenhaltungen:
EP-A1- 2 455 162          DE-A1-102005 048 233
DE-B3-102013 210 818    DE-U1-202011 108 189
DE-U1-202011 108 189

• RICHTER ET AL: "Microchannels for applications in liquid dosing and flow-rate measurement", SENSORS AND ACTUATORS A: PHYSICAL, ELSEVIER BV, NL, vol. 62, no. 1-3, 1 July 1997 (1997-07-01) , pages 480-483, XP022542055, ISSN: 0924-4247, DOI: 10.1016/S0924-4247(97)01486-6
• HUTZENLAUB T ET AL: "The effect of wetting properties on bubble dynamics and fuel distribution in the flow field of direct methanol fuel cells", JOURNAL OF POWER SOURCES, ELSEVIER, AMSTERDAM, NL, vol. 196, no. 19, 25 May 2011 (2011-05-25) , pages 8048-8056, XP028241168, ISSN: 0378-7753, DOI: 10.1016/J.JPOWSOUR.2011.05.070 [retrieved on 2011-06-01]

**Beschreibung**

Die vorliegende Erfindung betrifft Verfahren zur Handhabung von Flüssigkeit und insbesondere solche Verfahren, die eine fluid-dynamische Steuerung eines Flüssigkeitsflusses von einer Einlasskammer durch einen Verbindungskanal in eine Auslasskammer ermöglichen.

Die zentrifugale Mikrofluidik beschäftigt sich mit der Handhabung von Flüssigkeiten im Picoliter- bis Milliliter-Bereich in rotierenden Systemen. Solche Systeme sind meist Polymer-Einwegkartuschen, die in oder anstelle von Zentrifugenrotoren verwendet werden, mit der Absicht Laborprozesse zu automatisieren. Dabei können Standardlaborprozesse, wie Pipettieren, Zentrifugieren, Mischen oder Aliquotieren in einer mikrofluidischen Kartusche implementiert werden. Zu diesem Zweck beinhalten die Kartuschen Kanäle für die Fluidführung, sowie Kammern für das Auffangen von Flüssigkeiten. Die Kartuschen werden mit einer vordefinierten Abfolge von Drehfrequenzen, dem Frequenzprotokoll, beaufschlagt, so dass die in den Kartuschen befindlichen Flüssigkeiten durch die Zentrifugalkraft in entsprechende Kammern geführt werden können.

Anwendung findet die zentrifugale Mikrofluidik hauptsächlich in der Laboranalytik und in der mobilen Diagnostik. Die bislang häufigste Ausführung von Kartuschen ist eine zentrifugal-mikrofluidische Scheibe, die in speziellen Prozessiergeräten eingesetzt wird. Solche Kartuschen sind beispielsweise unter den Bezeichnungen "Lab-on-a-disk", "LabDisk", "Lab-on-CD", usw., bekannt. Andere Formate, wie ein mikrofluidisches Zentrifugenröhrchen, das unter der Bezeichnung "LabTube" bekannt ist, können in Rotoren bereits bestehender Standardlaborgeräten eingesetzt werden.

Eine wesentliche Grundoperation, die in zentrifugal-mikrofluidischen Kartuschen ausgeführt werden muss, ist das gezielte Zurückhalten und Freisetzen von Flüssigkeiten durch ein Ventil. Die Problematik besteht darin, Flüssigkeiten bei definierten Drehfrequenzen von einer ersten Fluidkammer (Einlasskammer) in eine zweite Fluidkammer (Auslasskammer) zu überführen, beziehungsweise, Flüssigkeiten bei definierten Drehfrequenzen in einer ersten Kammer zurückzuhalten.

Aus dem Stand der Technik ist es bekannt, solche Grundoperationen in zentrifugal-mikrofluidischen Systemen unter Verwendung von monolithisch integrierten Ventilen zu implementieren.

Bei [1] ist ein kapillares Siphonventil beschrieben. Kapillare Siphonventile bestehen aus einem S-förmigen Kanal, über den eine erste Kammer mit einer zweiten Kammer verbunden ist. Dabei liegt der Scheitelpunkt des Siphonkanals radial auf einem niedrigeren Punkt als der Flüssigkeitspegel in der ersten Kammer. Bei erhöhter Drehgeschwindigkeit dominieren Zentrifugaldrücke die Kapillardrücke. Fällt die Drehgeschwindigkeit unter eine Schaltfrequenz, ziehen Kapillarkräfte die Flüssigkeit radial nach innen über den Scheitelpunkt und auf dem absteigenden Ast des Siphonkanals radial über den Flüssigkeitspegel in der ersten Kammer. Bei erneuter Erhöhung der Drehgeschwindigkeit kann der so gefüllte Siphonkanal zusammen mit der Flüssigkeit aus der ersten in die zweite Kammer entleert werden.

Bei [2] ist ein zentrifugo-pneumatisches Ventil offenbart. Das zentrifugo-pneumatische Ventil basiert auf dem entstehenden pneumatischen Gegendruck, der in einem geschlossenen Luftvolumen erzeugt wird, wenn Flüssigkeit durch Zentrifugaldruck in dieses Luftvolumen gedrückt wird. Dabei ist die Flüssigkeit in einer ersten Kammer über einen radial nach außen führenden, dünnen Kanal mit dem Luftvolumen in einer zweiten, nicht entlüfteten Kammer verbunden. Erreicht der Zentrifugaldruck eine Schaltfrequenz, ergibt sich eine Rayleigh-Taylor-Instabilität der Grenzflächen zwischen Flüssigkeit und Luft, sodass die Flüssigkeit radial nach außen in die zweite Kammer fließt, während Luft radial nach innen aus der zweiten Kammer in die erste Kammer verdrängt wird.

Bei [3] ist ein zentrifugo-pneumatisches Ventil mit auflösbarer Membran beschrieben, bei dem im Vergleich zum bei [2] beschriebenen zentrifugo-pneumatischen Ventil das Luftvolumen mit einer auflösbaren Membran verschlossen wurde. Nachdem die Flüssigkeit von der ersten in die zweite Kammer transferiert wurde, löst sich die Membran auf und öffnet gegebenenfalls einen Auslaufkanal aus der zweiten Kammer.

Bei [4] ist ein hydraulisches Ventil beschrieben, das eine erste unbelüftete Kammer, in der sich die zu schaltende Flüssigkeit befindet, verwendet. Indem der Zentrifugaldruck erhöht wird, wird das in der ersten Kammer eingeschlossene Luftvolumen expandiert, bis letztendlich die Flüssigkeit über einen radial verlaufenden Kanal in eine zweite Kammer transferiert wird.

Ein zeitgesteuertes Ventil, bei dem ein kapillar benetzender Papierstreifen in einer zeitlichen Abfolge Belüftungen durch Benetzung auflösbarer Membranen öffnet, ist bei [5] beschrieben. Die geöffneten Membranen belüften zuvor geschlossene Luftvolumina und geben somit Kanäle für zentrifugal getriebene Flüssigkeiten frei. Der Flüssigkeitskanal selbst enthält eine zweite auflösbare Membran, die durch den ursprünglichen, nun fehlenden Gegendruck des nun belüfteten Luftvolumens benetzt wird und sich öffnet.

Ein Wasseruhr-Ventil ist aus [6] bekannt. Bei dem Wasseruhr-Ventil entleert sich eine Flüssigkeit aus einer ersten Kammer in eine zweite Kammer über die Zeit, indem diese zentrifugal durch einen Widerstand gedrückt wird. Dabei gibt der Füllpegel nacheinander Belüftungen weiterer Kammern frei, in denen im Anschluss Flüssigkeiten zentrifugal weitergeschaltet werden, indem der zuvor bestehende Unterdruck in den geschlossenen Luftvolumina durch Belüften aufgelöst wird.

Ein Vakuum-/Kompressionsventil ist bei [7] beschrieben, wobei Belüftungen einer ersten bzw. zweiten Kammer durch Aufschmelzen von Paraffin-Wachs geöffnet werden, um Flüssigkeit im Anschluss zentrifugal von der ersten in die zweite Kammer zu schalten.

Aus [8] ist ein thermo-pneumatisches Ventil bekannt, bei dem ein geschlossenes Luftvolumen in einer ersten Kammer, das über einen Kanal mit einer Flüssigkeit in einer zweiten Kammer verbunden ist, erwärmt wird. Durch ideale Gasausdehnung wird die Flüssigkeit aus der zweiten Kammer in einen zweiten Kanal und eine dritte Kammer verdrängt Aus [9] sind thermische Übertragungsverfahren bekannt, bei denen die Temperatur in einer oder mehreren Kammern geändert wird, um ein Vakuum zu erzeugen, um Flüssigkeiten in ausgewählten Richtungen in einem Prozessarray zu ziehen.

Aus [10] und [11] sind ferner Fluidikstrukturen bekannt, die es ermöglichen, ein Flüssigkeitsvolumen in viele Teilvolumina aufzuteilen, wobei gemäß [11] mehrere zwischen Fluidkammern angeordnete Siphonstrukturen verwendet sind, um einen Flüssigkeitsfluss zwischen den Kammern zu steuern. Weitere Mikrostrukturen mit Ventilen sind aus EP 2 455 162 A1 und DE 20 2011 108 189 U bekannt.

Es ist die Aufgabe der Erfindung, alternative Verfahren zu schaffen, die ein Handhaben von Flüssigkeiten mit geringem Aufwand ermöglichen.

Diese Aufgabe wird durch ein Verfahren gemäß Anspruch 1 gelöst.

Ausführungsbeispiele basieren auf der Erkenntnis, dass es möglich ist, Flüssigkeit zu handhaben, indem zwei unterschiedlich entlüftete Fluidkammern bereitgestellt werden, die über einen Verbindungskanal miteinander verbunden sind. Es wurde herausgefunden, dass es durch eine Betätigung solcher Fluidikstrukturen möglich ist, einen Druckunterschied von mindestens 30 Pa oder mehr zwischen dem kompressiblen Medium in der Einlasskammer und der Auslasskammer zu bewirken, wenn eine der beiden Kammern eine Flusswiderstand-Volumen-Produkt der Entlüftung von mindestens 6700 $\frac{N \cdot s}{m^2}$ (Newton mal Sekunde durch Quadratmeter) (im Folgenden auch hohes Flusswiderstand-Volumen-Produkt) aufweist. aufweist, wobei die andere der Einlasskammer oder Auslasskammer entlüftet ist und ein zweites Flusswiderstand-Volumen-Produkt aufweist, wobei das erste Flusswiderstand-Volumen-Produkt um einen Faktor von mindestens vier größer ist als das zweite Flusswiderstand-Volumen-Produkt.

Bei Ausführungsbeispielen ermöglicht dies, eine in dem Verbindungskanal implementierte Ventilvorrichtung zu schalten. Bei Ausführungsbeispielen ermöglicht dies, einem durch die Betätigung induzierten Fluss von der Einlasskammer in die Auslasskammer durch den Verbindungskanal temporär entgegenzuwirken.

Ausführungsbeispiele der Erfindung werden nachfolgend Bezug nehmend auf die beiliegenden Zeichnungen näher erläutert. Es zeigen:

Fig. 1a und 1b schematische Darstellungen zur Erläuterung des der Erfindung zugrundeliegenden Prinzips;

Fig. 2 eine schematische Darstellung von Fluidikstrukturen gemäß einer Vorrichtungzum Schalten einer Flüssigkeit;

Fig. 3a bis 3d schematische Darstellungen zur Erläuterung der Funktionsweise der in Fig.2 gezeigten Vorrichtung

Fig. 4a und 4b schematische Darstellungen zur Erläuterung eines Ausführungsbeispiels zum zeitverzögerten Pumpen einer Flüssigkeit;

Fig. 5a und 5b schematische Darstellungen von alternativen Ausführungsbeispielen; und

Fig. 6 und 7 schematische Seitenansichten zur Erläuterung von Flüssigkeitshandhabungsvorrichtungen mit fluid-dynamischer Flusssteuerung.

Bevor auf Ausführungsbeispiele der Erfindung anhand der Figuren eingegangen wird, seien zunächst einige allgemeine zugrundeliegende Aspekte erläutert.

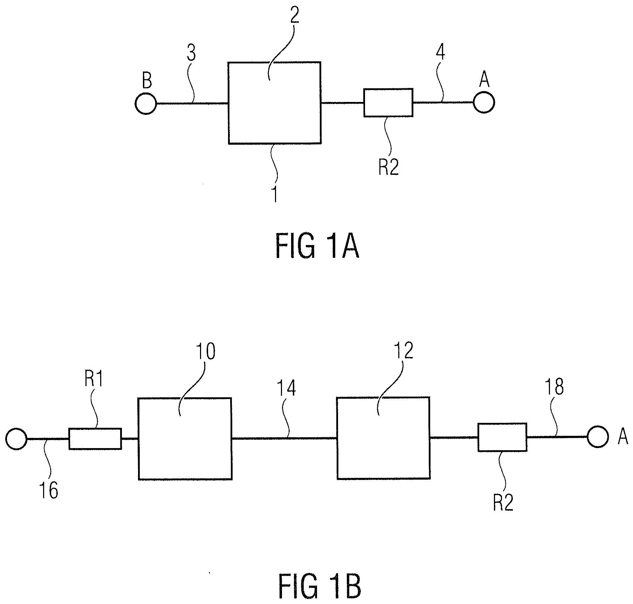

Fig. 1a zeigt den Grundaufbau einer Fluidkammer 1 mit einem Volumen V1, die vollständig oder teilweise mit einem kompressiblen Fluid 2 gefüllt ist. Der Druck innerhalb der Kammer 1 ist über eine Funktion p(T) von der Temperatur, beispielsweise durch Aufheizen/Abkühlen, oder über eine Funktion p(V) über das Volumen, beispielsweise durch Kompression/Expansion bestimmt. Die Fluidkammer 1 ist über einen widerstandsfreien fluidischen Kanal 3 mit einem Punkt B verbunden. Somit ist der Druck in Punkt B gleich dem Druck innerhalb der Fluidkammer 1. Die Fluidkammer 1 ist mit einem fluidischen Kanal 4, der einen fluidischen Widerstand R2 aufweist, verbunden, an dessen Ende (Punkt A) ein Druck P1 vorherrscht. Bei dieser Konfiguration wird sich bei einem vorliegenden Druckgradienten von Kammer 1 zu Punkt A der Druckunterschied über den Fluidkanal 4 mit dem Flusswiderstand R2 ausgleichen. Dieser Grundaufbau liegt Ausführungsbeispielen der Erfindung zugrunde und kann als ein Kernelement betrachtet werden. Der Punkt B kann in ein beliebiges fluidisches Netzwerk integriert werden, um Prozesse, beispielsweise das Schalten eines Fluidventils oder das Pumpen eines Fluides, durch den Druck bzw. den zeitlichen Druckverlauf in Punkt B zu steuern.

Bei Ausführungsbeispielen kann die Kammer 1 die Einlasskammer oder die Auslasskammer sein. Der Punkt B kann jeweils durch die Mündung des Verbindungskanals in die entsprechende Kammer gebildet sein. Der Fluidkanal 4 mit dem Flusswiderstand R2 kann bei Ausführungsbeispielen den Entlüftungskanal der Fluidkammer mit dem hohen Flusswiderstand-Volumen-Produkt darstellen.

Ausführungsbeispiele der Erfindung basieren auf der Erkenntnis, dass es durch Auslegung des Verlaufs und der Dimensionen des fluidischen Widerstands R2, sowie durch die Dimensionen der Fluidkammer 1 möglich ist, die Dynamik von temporären Druckausgleichsvorgängen zu nutzen, um Druckzustände in dem Punkt B zu generieren, die in einem fluidischen Netzwerk genutzt werden können, beispielsweise als ein Schaltsignal für ein Druckventil.

Bei Ausführungsbeispielen wird eine temporäre Druckänderung durch eine Temperaturänderung in einer entlüfteten Kammer mit definiertem Flusswiderstand R der Entlüftung bewirkt. Um den durch die Temperaturänderung induzierten Druckunterschied für eine bestimmte Zeit (t1) aufrecht zu erhalten, kann entweder der Widerstand R groß sein oder ein großes Volumen der Kammer zur Verfügung stehen. Entscheidende Größe für die Auslegung ist somit das Produkt aus Flusswiderstand und verfügbarem Kammervolumen, also das Flusswiderstand-Volumen-Produkt. Die bestimmte Zeit t1 is aus zwei Gründen von Bedeutung. Erstens da die Änderung der Temperatur in dem Volumen eine gewisse Zeit benötigt und zweitens da der Schalter eine gewisse Zeit benötigt, um aktuiert zu werden.

Der Punkt B kann durch einen Verbindungskanal und eine weitere entlüftete Fluidkammer implementiert sein. Die weitere Fluidkammer kann durch eine Entlüftungsöffnung, die einen Flusswiderstand, der gegen Null geht, oder durch einen Entlüftungskanal entlüftet sein, wobei das Flusswiderstand-Volumen-Produkt der weiteren Fluidkammer kleiner als ein Viertel des Flusswiderstand-Volumen-Produkts der Fluidkammer 1 ist. Es wurde erkannt, dass ein solches Verhältnis vorteilhaft sein kann, um durch eine entsprechende Betätigung einen ausreichend hohen Druckunterschied von 30 Pa oder mehr zu bewirken.

Unter Entlüftung wird hierin eine fluidische Verbindung mit der Umgebung verstanden.

Unter "Umgebung", mit der die Entlüftungskanäle gekoppelt sind, kann hierin ein Volumen verstanden werden, das mindestens um einer Faktor 2 größer ist als das Gesamtvolumen im System. Die Umgebung kann entweder die Atmosphäre sein oder ist mit dieser über einen geringen fluidischen Widerstand verbunden, sodass eine thermische Änderung zu quasi keinem für die Schaltung relevanten Druckunterschied in der Umgebung führt.

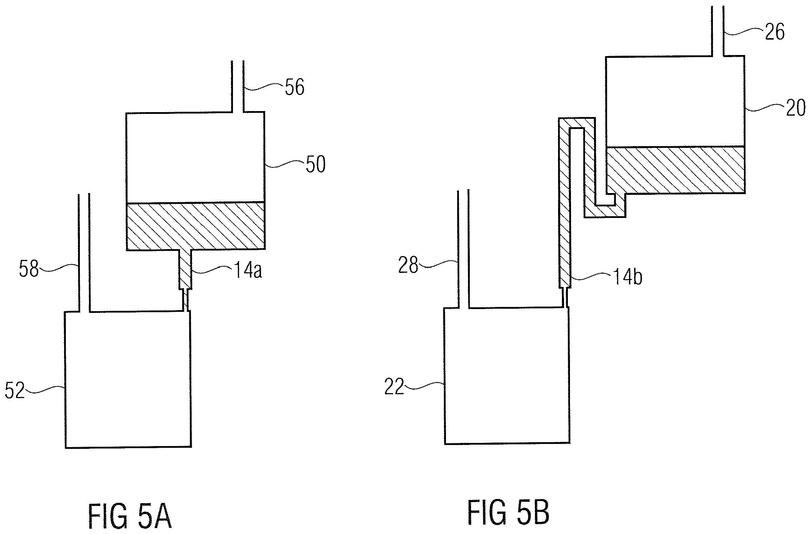

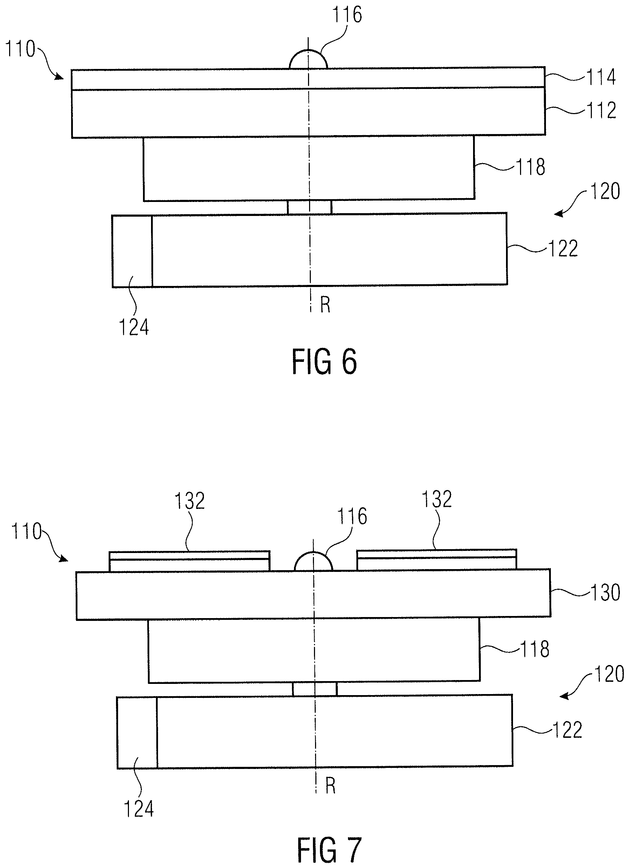

Fig. 1b zeigt die Anwendung des obigen Prinzips auf Fluidikstrukturen, die in einem Fluidikmodul gebildet sein können, wie es später Bezug nehmend auf die Figuren 5 und 6 erläutert wird. Die Fluidikstrukturen, die in Fig. 1b gezeigt sind, weisen eine erste Fluidkammer 10, eine zweite Fluidkammer 12 und einen Verbindungskanal 14 auf. Die zweite Kammer ist über einen Entlüftungskanal 18, der einen Flusswiderstand R2 aufweist, mit dem Punkt A verbunden. Der Punkt A kann auf Umgebungsdruck sein. Die zweite Kammer 12 weist das hohe Flusswiderstand-Volumen-Produkt auf. Die erste Kammer 10 ist ebenfalls entlüftet, beispielsweise über einen Entlüftungskanal 16 mit einem Flusswiderstand R1. Alternativ könnte die erste Kammer auch durch eine Entlüftungsöffnung entlüftet sein, so dass der Flusswiderstand für die Entlüftung gegen Null geht.

Das Flusswiderstand-Volumen-Produkt der zweiten Fluidkammer beträgt mindestens $6700 \frac{N \cdot s}{m^2}$. Ferner ist erfindungsgemäß dieses Flusswiderstand-Volumen-Produkt mindestens viermal größer als das Flusswiderstand-Volumen-Produkt der anderen Fluidkammer. Es gilt: $V2 \cdot R2 \geq V1 \cdot R1$, wobei V2 das Volumen der zweiten Fluidkammer 12, R2 der Entlüftungsflusswiderstand der zweiten Fluidkammer 12, V1 das Volumen der ersten Fluidkammer 10 und R1 der Entlüftungsflusswiderstand der ersten Fluidkammer 10 ist. Dieses Verhältnis zwischen den Flusswiderstand-Volumen-Produkten ist insbesondere als erfüllt anzusehen, wenn der Flusswiderstand der Entlüftung der anderen Fluidkammer gegen Null geht, beispielsweise weil die andere Fluidkammer nicht über einen Kanal sondern über eine Öffnung großen Querschnitts entlüftet ist. Dadurch können im Betrieb unterschiedliche Druckausgleichsraten in den Fluidkammern 10 und 12 bewirkt werden, durch die ein Schalten bei einer konstanten Drehfrequenz oder ein zeitverzögertes Pumpen von Flüssigkeit stattfinden kann.

Unter Flusswiderstand wird hierin, wenn nichts anderes angegeben ist, jeweils der Widerstand für einen Fluss des kompressiblen Mediums, in der Regel Luft, verstanden. Der fluidische Widerstand $R_{fl}$ eines Fluidkanals berechnet sich zu

$$R_{fl} = C_{geometry} \cdot \frac{\eta l}{A^2}$$

wobei $\eta$ die Viskosität des kompressiblen Mediums (Luft), l die Länge des Fluidkanals und A die Querschnittsfläche des Fluidkanals ist. $C_{geometry}$ ist ein geometrieabhängiger Faktor, wobei Fachleuten für unterschiedliche Kanalquerschnitte entsprechende Geometriefaktoren bekannt sind. Für einen rechteckigen Kanalquerschnitt ist beispielsweise $C_{geometry}$ definiert durch:

$$C_{geometry} = \frac{2}{As \sum_{i=1}^{\infty} \frac{As}{\alpha_i^5}(\frac{\alpha_i}{As} - \tanh(\frac{\alpha_i}{As}))} \cdot$$

Dabei ist As gegeben durch As = h/w (h = Höhe des Fluidkanals, w = Breite des Fluidkanals) und $\alpha_i$ ist

gegeben durch $\alpha_i = \frac{\pi(2i-1)}{2}$ .

Hinsichtlich der Berechnung des Flusswiderstands, insbesondere unter Verwendung der obigen Gleichungen, wird beispielsweise auf [12] verwiesen.

Unter einem Flusswiderstand-Volumen-Produkt wird hierin das Produkt aus Volumen einer Kammer und Flusswiderstand des der Kammer zugeordneten Entlüftungskanals für das kompressible Medium verstanden.

Im Betrieb wird eine Flüssigkeit in die Einlasskammer eingebracht, so dass die Einlasskammer vollständig mit der Flüssigkeit oder teilweise mit der Flüssigkeit und teilweise mit dem kompressiblen Medium gefüllt ist, wobei die Auslasskammer zumindest teilweise mit dem kompressiblen Medium gefüllt ist. Dies stellt den ersten unbetätigten Zustand dar. Bei dem kompressiblen Medium wird es sich in der Regel um Luft handeln, wobei jedoch auch andere Gase verwendet werden können. Bei der Flüssigkeit kann es sich beispielsweise um wässrige Lösungen, Vollblut oder Blutserum oder Flüssigkeiten mit vergleichbarer Viskosität handeln.

Ausgehend von diesem ersten Zustand werden die Fluidikstrukturen betätigt, so dass ein Druckunterschied zwischen den Drücken im kompressiblen Medium in den beiden Fluidkammern erzeugt wird, der mindestens 30 Pa beträgt.

Der Verbindungskanal 14 weist 14 eine Ventilvorrichtung auf, beispielsweise einen Siphon oder ein Kapillarventil. Bei Verwendung solcher Vorrichtungen kann beispielsweise in dem ersten Zustand ein Rotationskörper, der die Fluidikstrukturen aufweist, mit einer Rotationsgeschwindigkeit gedreht werden, bei der die Ventilvorrichtung verhindert, dass Flüssigkeit durch den Verbindungskanal von der Einlasskammer in die Auslasskammer gelangt. Ausgehend von dem ersten Zustand kann dann eine Betätigung durch eine Erwärmung oder Abkühlung erfolgen. Bei Ausführungsbeispielen stellt die zweite Kammer 12 die Einlasskammer und die Kammer 10 die Auslasskammer dar. In diesen Fällen kann durch eine Erwärmung ein solcher Überdruck in dem kompressiblen Medium in der Einlasskammer gegenüber dem kompressiblen Medium in der Auslasskammer erzeugt werden, dass dadurch die Ventilvorrichtung geschaltet und Flüssigkeit aus der Einlasskammer in die Auslasskammer getrieben wird. Bei Ausführungsbeispielen stellt die zweite Kammer 12 die Auslasskammer und die erste Kammer 10 die Einlasskammer dar. Bei solchen Ausführungsbeispielen kann durch eine Abkühlung ein solcher Unterdruck in dem kompressiblen Medium in der Auslasskammer gegenüber dem kompressiblen Medium in der Einlasskammer erzeugt werden, dass dadurch die Ventilvorrichtung geschaltet und Flüssigkeit aus der Einlasskammer in die Auslasskammer gezogen wird.

Bei Ausführungsbeispielen kann eine entsprechende Erwärmung mit einer Heizrate von $\geq 0,1$ K/s oder von $\geq 0,5$ K/s erfolgen. Bei Ausführungsbeispielen kann eine entsprechende Erwärmung mit einer gemittelten Heizrate von $\geq 0,1$ K/s oder von $\geq 0,5$ K/s erfolgen. Die gemittelte Heizrate kann durch den Mittelwert von Heizraten beim Aufheizen des kompressiblen Mediums von einer Temperatur T1 auf eine Temperatur T2 definiert sein, wobei T1<T2. Bei Ausführungsbeispielen kann eine entsprechende Abkühlung mit einer Abkühlrate von $\geq 0,1$ K/s oder von $\geq 0,5$ K/s erfolgen. Bei Ausführungsbeispielen kann eine entsprechende Abkühlung mit einer gemittelten Abkühlrate von $\geq 0,1$ K/s oder von $\geq 0,5$ K/s erfolgen. Die gemittelte Abkühlrate kann durch den Mittelwert von Abkühlraten beim Abkühlen des kompressiblen Mediums von einer Temperatur T2 auf eine Temperatur T1 definiert sein, wobei T1<T2. Es wurde herausgefunden, dass entsprechende Heizraten und Abkühlraten eine geeignete Betätigung ermöglichen, um einen ausreichenden Druckunterschied bewirken zu können. Bei Ausführungsbeispielen können die Fluidikstrukturen (Flusswiderstände und Volumina) so ausgelegt sein, dass ein entsprechender Druckunterschied bei einer gemittelten Heizrate bzw Abkühlrate erzielt werden kann, die in einem Bereich von 0,5 K/s bis 5 K/S oder von 0,5 K/s bis 10 K/s liegt.

Bei Ausführungsbeispielen kann das Aufheizen oder Abkühlen des kompressiblen Mediums global durch ein Aufheizen oder Abkühlen der Umgebungsluft erfolgen. Aufwändige Heiz/Kühlstrukturen, die ausgelegt sind, um ein lokales Aufheizen/Abkühlen zu bewirken, sind dann nicht erforderlich.

Bei Ausführungsbeispielen kann das Aufheizen oder Abkühlen lokal in der Einlasskammer und/oder Auslasskammer erfolgen, was einen energiesparenden Betrieb ermöglicht.

Bei Ausführungsbeispielen ist die Betätigungseinrichtung ausgelegt, um den Druckunterschied durch eine mechanische Kompression oder Dekompression des kompressiblen Mediums zu bewirken. Beispielsweise kann die Betätigungseinrichtung ausgelegt sein, um die Flüssigkeit in der Einlasskammer mit einer Kraft zu beaufschlagen, durch die die Flüssigkeit durch den Verbindungskanal aus der Einlasskammer in die Auslasskammer getrieben wird. Aufgrund der unterschiedlichen Druckausgleichsraten der Einlasskammer und der Auslasskammer kann dadurch entweder das kompressible Medium in der Einlasskammer dekomprimiert werden, wenn die Kammer 12 die Einlasskammer ist, oder das kompressible Medium in der Auslasskammer kann komprimiert werden, wenn die Kammer 12 die Auslasskammer ist. Dadurch kann einem durch die Betätigung induzierten Fluss von der Einlasskammer in die Auslasskammer temporär entgegengewirkt werden. Unter temporär ist dabei zu verstehen, dass dieses Entgegenwirken so lange stattfindet, bis der Druckunterschied zwischen der Einlasskammer und der Auslasskammer, der aufgrund der unterschiedlichen Druckausgleichsraten erzeugt wird, ausgeglichen ist. Mit anderen Worten kann bei solchen Ausführungsbeispielen die Betätigungseinrichtung ausgebildet sein, um die Flüssigkeit in der Einlasskammer mit einer solchen Kraft zu beaufschlagen, dass in der Flüssigkeit in der Einlasskammer ein Überdruck gegenüber dem Druck in der Auslasskammer eingeprägt wird, wobei dieser Überdruck durch den in dem kompressiblen Medium in der Einlasskammer und der Auslasskammer bewirkten Druckunterschied temporär verringert wird. Dadurch wird der Fluss von der Einlasskammer in die Auslasskammer gedrosselt.

Bei Ausführungsbeispielen kann die Beaufschlagung der Flüssigkeit mit einer Kraft durch eine Erhöhung einer Rotationsfrequenz, mit der die Fluidikstrukturen gedreht werden, erfolgen. Beispielsweise kann die Rotationsfrequenz in dem ersten Zustand Null oder so gering sein, dass aufgrund von Oberflächenspannungen an der Mündung des Verbindungskanals in die Auslasskammer kein Flüssigkeitsfluss in die Auslasskammer stattfindet. Ausgehend von einem solchen ersten Zustand kann die Rotationsfrequenz erhöht werden, beispielsweise mit einer Erhöhungsrate von $\geq$ 1 Hz/s, um die Fluidikstrukturen zu betätigen.

Bei Ausführungsbeispielen der Erfindung sind die Fluidikstrukturen in einem Fluidikmodul gebildet, das einen Rotationskörper darstellt oder das in einen Rotationskörper einsetzbar ist. Ausführungsbeispiele der Erfindung weisen eine Antriebseinrichtung auf, die ausgebildet ist, um das Fluidikmodul und damit die Fluidikstrukturen mit einer Rotation zu beaufschlagen.

Ausführungsbeispiele der Erfindung schaffen somit Verfahren zur kontrollierten Freisetzung und zum kontrollierten Leiten einer Flüssigkeit durch einen Kanal und insbesondere solche Verfahren, die zum zeitgeschalteten Pumpen einer Flüssigkeit in Zentrifugenrotoren geeignet sind. Ausführungsbeispiele ermöglichen derartige Grundoperationen in einem robusten Prozess beispielsweise mittels eines monolithisch (in den Verbindungskanal) integrierten Ventils, so dass keine zusätzlichen Komponenten oder Materialien erforderlich sind, die durch Materialkosten oder zusätzliche Aufbau- und Verbindungstechnik (Assemblierung) beispielsweise die Kosten einer Kartusche wesentlich erhöhen würden.

Ausführungsbeispiele basieren auf der Erkenntnis, dass es möglich ist, bei einer konstanten Drehfrequenz Flüssigkeit über eine bestimmte radiale Distanz zu pumpen, indem entlüftete Fluidkammern verwendet werden, die über einen Verbindungskanal verbunden sind, wobei die Fluidkammern und deren Entlüftung derart ausgestaltet ist, dass unterschiedliche Druckausgleichsraten in den Fluidkammern vorliegen. Solche unterschiedlichen Druckausgleichsraten können über unterschiedliche Flusswiderstand-Volumen-Produkte realisiert werden. Ausführungsbeispiele der Erfindung schaffen somit Verfahren zum Pumpen einer Flüssigkeit, die ein zeitgesteuertes Schalten bzw. Pumpen bei einer konstanten Drehfrequenz über eine bestimmte radiale Distanz ermöglichen. Andere Ausführungsbeispiele ermöglichen ein verzögertes zeitabhängiges Pumpen von Flüssigkeiten.

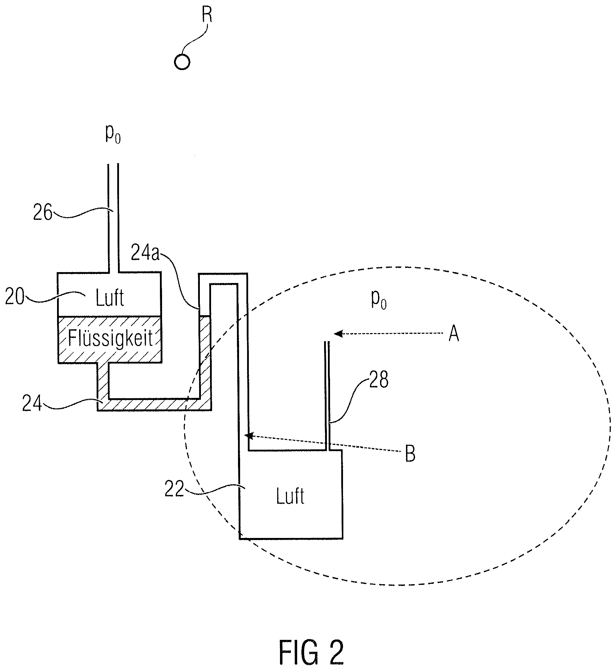

Fig. 2 zeigt Fluidikstrukturen in einem zentrifugal-mikrofluidischen System, die einen Fluid-Schalter darstellen. Die Fluidikstrukturen werden derart betätigt, dass in einer Auslasskammer ein Unterdruck gegenüber einer Einlasskammer erzeugt wird, durch den die Flüssigkeit aus der Einlasskammer in die Auslasskammer gezogen wird. Die Fluidikstrukturen weisen eine entlüftete Einlasskammer 20, eine entlüftete Auslasskammer 22, einen Verbindungskanal 24, der die Einlasskammer 20 und die Auslasskammer 22 fluidisch verbindet und einen Siphon aufweist, einen Einlasskammerentlüftungskanal 26 und einen Auslasskammerentlüftungskanal 28 auf. Die Entlüftungskanäle münden jeweils in radial inneren Bereichen in die Kammern 20 und 22. Der Verbindungskanal 24 mündet in einen radial äußeren Bereich der Einlasskammer 20 und in einen radial inneren Bereich der Auslasskammer 22.

Positionen, die den Punkten A und B in Fig. 1a entsprechen, sind in Fig. 2 durch gestrichelte Pfeile dargestellt. Die Entlüftungskanäle sind jeweils mit einem Umgebungsdruck $p_0$ gekoppelt, so dass am Punkt A der Umgebungsdruck $p_0$ herrscht. Der Entlüftungskanal 26 weist einen fluidischen Widerstand R1, der Entlüftungskanal 28 einen fluidischen Widerstand R2 und der Verbindungskanal 24 einen fluidischen Widerstand R3 auf. Es gilt R3 << R2, so dass R3 gegenüber R2 vernachlässigbar ist. Es gilt ferner R1 << R2, so dass ein Flusswiderstand-Volumen-Produkt der Auslasskammer 22 größer oder gleich dem vierfachen Flusswiderstand-Volumen-Produkt der Einlasskammerkammer 20 ist. Die Fluidikstrukturen sind um ein Rotationszentrum R drehbar.

Wie in Fig. 2 gezeigt ist, ist die Einlasskammer 20 mit einer Flüssigkeit und Luft als einem Beispiel für ein kompressibles Fluid gefüllt. Die Einlasskammer 20 ist mit der Auslasskammer 22 mittels des Verbindungskanals 24 verbunden, der einen radial nach innen laufenden Kanalabschnitt 24a aufweist, der sich radial weiter nach innen erstreckt als die Füllhöhe der Flüssigkeit in der Einlasskammer 20. Der Verbindungskanal 24 bildet somit unter Rotation einen Potentialunterschied (Siphon).

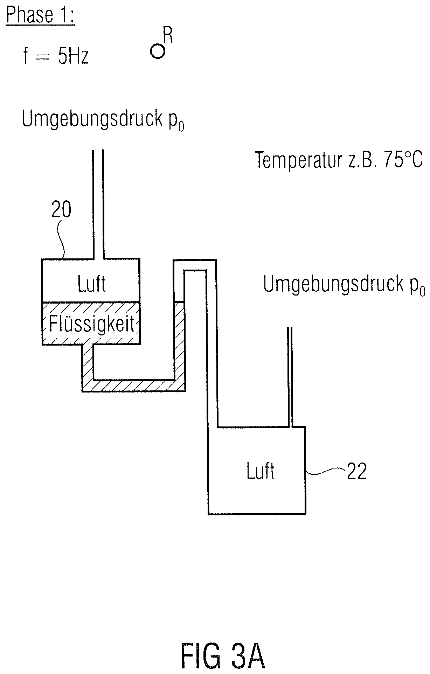

Der Ablauf eines Schaltvorganges ist in den Figuren 3a bis 3d schematisch dargestellt. In einer ersten Phase 1, die in Fig. 3a gezeigt ist, befindet sich das zentrifugale System unter Rotation bei einer konstanten Drehfrequenz (von z.B. 5 Hz) bei einer ersten Temperatur (von z.B. 75°C). Der Potentialunterschied kann von der Flüssigkeit nicht überwunden werden und die Flüssigkeit verbleibt zunächst in der Einlasskammer 20. Dies stellt den ersten unbetätigten Zustand der Fluidikstrukturen dar.

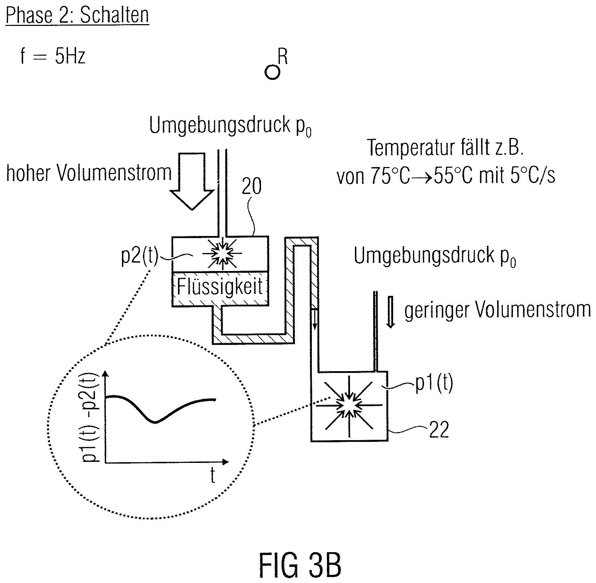

Ausgehend von diesem Zustand wird zu einem gegebenen Zeitpunkt in einer zweiten Phase 2, die in Fig. 3b gezeigt ist, die Temperatur auf z.B. 55°C gesenkt. Dabei wird eine schnelle Temperaturabnahme angenommen, beispielsweise eine Temperaturabnahme von $\geq$ 0,1 K/s oder von $\geq$ 0,5 K/s. Dadurch wird sich gemäß der idealen Gasgleichung die Luft im rotierenden System und somit in den beiden Kammern 20 und 22 komprimieren. Durch die thermische Kompression der Luft in den Kammern 20 und 22 entsteht ein Druckgradient zwischen der Umgebung (Druck $p_0$) und den Kammern 20 und 22, dessen zeitlicher Verlauf von den fluidischen Widerständen der Kanäle 24, 26 und 28 und den Volumina der Kammern 20 und 22 abhängt, wobei die Fluidkanäle und die Kammern hinsichtlich ihrer Volumina bzw. Flusswiderstände derart ausgelegt sind, dass die beschriebene Funktionalität erreicht wird.

Durch die Entlüftungskanäle kann Luft für den Druckausgleich nicht sofort bereitgestellt werden, da beide einen fluidischen Widerstand haben (also ein viskose Dissipation stattfindet). Es entsteht also ein Druckverlauf p1(t) in der Auslasskammer 22 und ein Druckverlauf p2(t) in der Einlasskammer 20, der durch die unterschiedlichen Flusswiderstände der Entlüftungskanäle auch einen Druckunterschied von Einlasskammer 20 zu Auslasskammer 22 zur Folge haben: |p1(t) - p2(t)| > 0. Durch die Bedingung R2 >> R1 und R2 » R3 wird der Druckausgleich in der Einlasskammer 20 vergleichsweise schnell ablaufen, der Druckausgleich in der Auslasskammer 22 wird in Relation jedoch länger andauern, so dass sich ein zeitlicher Druckunterschied zwischen der Einlasskammer 20 und der Auslasskammer 22 ergibt, da durch die Flusswiderstände der Druckausgleich nicht instantan ablaufen kann. Unter >> kann hierin beispielsweise ein Faktor von mindestens 4 verstanden werden.

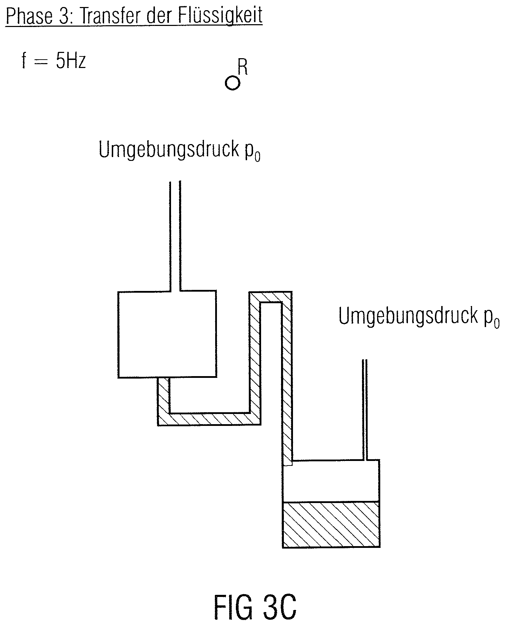

Der dadurch entstehende zeitliche Druckgradient wird genutzt, um den Potentialunterschied der Flüssigkeit zwischen den Kammern 20 und 22 zu überwinden, also den Schalter zu aktivieren. Bei dem Beispiel führt der Druckunterschied zwischen den Kammern p1(t) - p2(t) durch die unterschiedliche Dynamik des Druckausgleichs dazu, dass der Flüssigkeitsmeniskus gegen die vorhandene Zentrifugalkraft in den Verbindungskanal 24 und über den Scheitelpunkt des Siphons hinweg gezogen wird. Dies führt dann zum vollständigen Entleeren der Einlasskammer 20 in die Auslasskammer 22 unter Rotation, da der Verbindungskanal 24 insgesamt ein radiales Gefälle aufweist. Diese Phase 3 ist in Fig. 3c dargestellt. Anders ausgedrückt wird durch den kurzzeitigen Druckunterschied die Flüssigkeit gegen die Zentrifugalkraft in den Verbindungskanal 24 gezogen und beim Überschreiten des Scheitelpunktes durch den Meniskus (Füllhöhe in der Einlasskammer 20) entleert sich die Einlasskammer 20 durch ein Zusammenspiel von p1(t) - p2(t) und dem dann im Verhältnis zunehmenden Zentrifugaldruck.

Mit der Annahme, dass R2 >> R3 ist, kann der Widerstand R3 dabei in einer ersten Näherung vernachlässigt werden. Eine weitere Annahme dabei ist, dass die viskose Dissipation der Flüssigkeit im Verbindungskanal 24 kleiner ist als die viskose Dissipation der Luft im Entlüftungskanal 28.

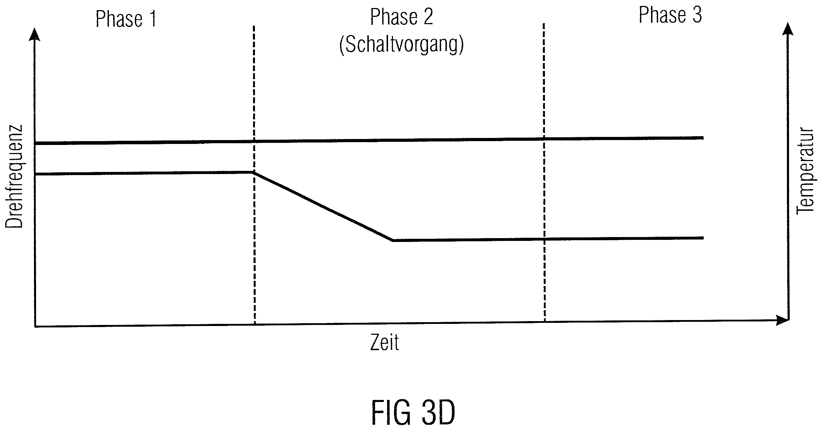

Fig. 3d zeigt die Drehfrequenz und die Temperatur während der drei Phasen. Die Drehfrequenz ist während der drei Phasen konstant. Als Antriebseinrichtung kann eine Zentrifuge verwendet werden, deren Drehfrequenz nicht auf verschiedene Frequenzen einstellbar sein muss und deren Drehrichtung nicht umkehrbar sein muss. Die Temperatur wird in der zweiten Phase abgesenkt. Eine entsprechende Temperierung kann dabei durch eine Heiz/Kühleinrichtung erfolgen, die konfiguriert ist, um den gesamten Rotationskörper bzw. das gesamte Fluidikmodul, in dem die Fluidikstrukturen gebildet sind, zu heizen bzw. zu kühlen. Zu diesem Zweck kann eine entsprechende Heiz- bzw. Kühlplatte oder eine Strahlungs-Heizung bzw. -Kühlung vorgesehen sein.

Bei dem Bezug nehmend auf Fig. 2 beschriebenen Ausführungsbeispiel weist die Auslasskammer 22 das hohe Flusswiderstand-Volumen-Produkt (von mindestens 6700 $\frac{N \cdot s}{m^2}$ ) auf.

Alternativ unterscheiden sich die Fluidikstrukturen von den in Fig. 2 gezeigten Strukturen dadurch, dass die Einlasskammer 20 das hohe Flusswiderstand-Volumen-Produkt aufweist, beispielsweise indem die Flusswiderstände der Entlüftungskanäle 26 und 28 vertauscht sind. Das Flusswiderstand-Volumen-Produkt der Einlasskammer 20 wäre dann höher (≥4-mal) als das Flusswiderstand-Volumen-Produkt der Auslasskammer 22. Bei einem solchen Ausführungsbeispiel kann ausgehend von Phase 1 durch eine Temperaturerhöhung ein Überdruck in den Fluidikstrukturen erzeugt werden, der in der Einlasskammer 20 langsamer ausgeglichen wird als in der Auslasskammer 22. Somit wird wiederum eine Druckdifferenz zwischen der Einlasskammer 20 und der Auslasskammer 22 bewirkt, durch die der Siphon in dem Verbindungskanal überwunden werden kann, so dass die Flüssigkeit aus der Einlasskammer 20 in die Auslasskammer 22 getrieben wird.

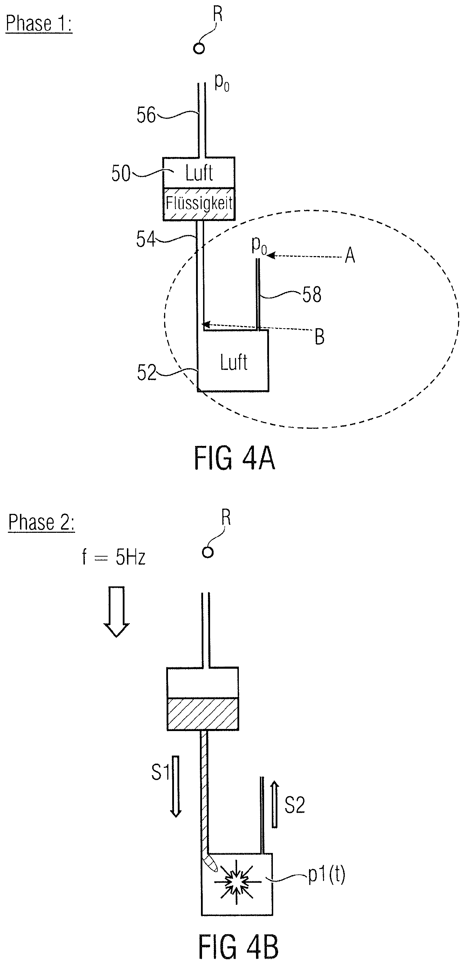

Ein alternatives Ausführungsbeispiel wird nachfolgend Bezug nehmend auf die Figuren 4a und 4b beschrieben.

Fig. 4a zeigt schematisch Fluidikstrukturen in einem zentrifugal-mikrofluidischen System, die eine entlüftete Einlasskammer 50, eine entlüftete Auslasskammer 52 und einen Verbindungskanal 54, der die Einlasskammer 50 mit der Auslasskammer 52 fluidisch verbindet, aufweist. Die Einlasskammer 50 liegt radial zum Drehzentrum R weiter innen als die Auslasskammer 52, d.h. der Verbindungskanal 54 weist ein radiales Gefälle auf, so dass Flüssigkeit zentrifugal durch den Verbindungskanal 54 aus der ersten Kammer 50 in die zweite Kammer 52 treibbar ist. Der Verbindungskanal 54 weist jedoch keine Potentialbarriere in Form eines Siphon auf.

Ein Einlasskammerentlüftungskanal 56 mit dem fluidischen Widerstand R1 ist mit der Umgebung gekoppelt und mündet in einen radial inneren Bereich der Einlasskammer 50 und ein Auslasskammerentlüftungskanal 58 mit dem fluidischen Widerstand R2 ist mit der Umgebung gekoppelt und mündet in einen radial inneren Bereich der Auslasskammer 52. Der Verbindungskanal 54, der einen fluidischen Widerstand R3 aufweist, mündet in einen radial äußeren Bereich der Einlasskammer 50 und in einen radial inneren Bereich der Auslasskammer 52. Das Flusswiderstand-Volumen-Produkt der Auslasskammer 52 beträgt zumindest 6700 $\frac{N \cdot s}{m^2}$ . Hinsichtlich der fluidischen Widerstände gilt: R1 << R2 und R3 << R2, so dass ein Flusswiderstand-Volumen-Produkt der Auslasskammer 52 größer oder gleich dem vierfachen Flusswiderstand-Volumen-Produkt der Einlasskammer 50 ist.

Die Fluidikstrukturen sind um ein Rotationszentrum R drehbar. Positionen, die den Punkten A und B in Fig. 1a entsprechen, sind in Fig. 4a durch gestrichelte Pfeile dargestellt.

Wie in Fig. 4a gezeigt ist, ist im Betrieb in einem ersten unbetätigten Zustand die Auslasskammer 52 mit Luft als einem Beispiel für ein kompressibles Medium gefüllt. Die Einlasskammer 50 ist teilweise mit einer Flüssigkeit und teilweise mit einem Luftvolumen gefüllt. Alternativ könnte die Einlasskammer 50 auch vollständig mit der Flüssigkeit gefüllt sein. In einer ersten Phase 1 sei der Druck in der Flüssigkeit in der Einlasskammer 50 und der Luftdruck in Einlasskammer 50 und der Auslasskammer 52 gleich dem Umgebungsdruck. Beispielsweise können die Fluidikstrukturen während der ersten Phase stationär sein, d.h. keiner Rotation unterworfen sein. Während der ersten Phase kann eine Oberflächenspannung der Flüssigkeit verhindern, dass diese in den Verbindungskanal 54 oder von dem Verbindungskanal 54 in die Auslasskammer 52 gelangt.

In einer zweiten Phase 2, die in Fig. 4b gezeigt ist, wird das System innerhalb kurzer Zeit auf eine Rotation von beispielsweise 5 Hz beschleunigt. Dabei wirkt die Zentrifugalkraft auf die Flüssigkeit und ein Pumpmechanismus durch den entstehenden Zentrifugaldruck wird eingeleitet. Dabei fließt die Flüssigkeit mit einem bestimmten Volumenstrom S1 durch den Verbindungskanal 54 und in die Auslasskammer 52 und komprimiert dadurch das Luftvolumen in der Auslasskammer um $\Delta V$. Dies führt zu einer Druckerhöhung von p(V) zu p(V - $\Delta V$) in der Auslasskammer 52. Der entstehende Druckgradient zur Umgebung hat zur Folge, dass Luft über den Auslasskammerentlüftungskanal mit einem bestimmten Volumenstrom S2 in die Umgebung fließt. Es entsteht ein Druck p1(t) in der Auslasskammer 52, der unter der Annahme R2 >> R3 und R2 >> R1 in erster Näherung insbesondere von R2 sowie den Flüssigkeitseigenschaften (z.B. der Viskosität) und den Lufteigenschaften abhängig ist. Dadurch sind die resultierenden Volumenströme S1 und S2 von p1(t) und somit von R2 abhängig. In anderen Worten, kann der Durchfluss bei einem Pumpschritt von Flüssigkeit von der Einlasskammer 50 in die Auslasskammer 52 durch Einstellen des Widerstands R2 reguliert werden, um beispielsweise eine Verzögerung beim Pumpen zu realisieren. Somit ist es möglich die Flussrate und somit die Verzögerung bei der Entleerung der Einlasskammer in die Auslasskammer über die Wahl der fluidischen Widerstände, insbesondere der Entlüftungskanäle zu regeln.

Um beim Pumpen einer Flüssigkeit aus der Einlasskammer in die Auslasskammer eine Verzögerung zu realisieren, kann anders ausgedrückt bei dem in Fig. 4 gezeigten Ausführungsbeispiel der Gesamtluftwiderstand gleich oder größer sein als ein Faktor mal dem Gesamtflüssigkeitswiderstand, wobei der Faktor 4 betragen kann. Der Gesamtluftwiderstand ist dabei der Widerstand, der der Luft bezüglich eines Entweichens aus der Auslasskammer geboten wird, und der Gesamtflüssigkeitswiderstand ist der Widerstand, der der Flüssigkeit bezüglich des Fließens in die Auslasskammer geboten wird.

Bei einem zu dem in Fig. 4 gezeigten Ausführungsbeispiel alternativen Ausführungsbeispiel kann die Einlasskammer 50 das hohe Flusswiderstand-Volumen-Produkt aufweisen, indem beispielsweise die Flusswiderstände der Entlüftungskanäle 56 und 58 vertauscht sind. Bei einem solchen Ausführungsbeispiel wird bei der Beschleunigung der Fluidikstrukturen auf die höhere Rotationsfrequenz in der Einlasskammer 50 ein Unterdruck erzeugt, der der auf die Flüssigkeit wirkenden Zentrifugalkraft entgegenwirkt und somit einen Fluss der Flüssigkeit durch den Verbindungskanal 54 von der Einlasskammer 50 in die Auslasskammer 52 drosselt.

Der Flusswiderstand des Verbindungskanals bezüglich der Flüssigkeit kann viel geringer sein als der Flusswiderstand des Entlüftungskanals der Fluidkammer mit dem hohen Flusswiderstand-Volumen-Produkt bezüglich des kompressiblen Mediums. Der Flusswiderstand des Verbindungskanals kann in diesen Fällen als vernachlässigbar angesehen werden.

Bei anderen Ausführungsbeispielen kann der Flusswiderstand des Verbindungskanals bezüglich der Flüssigkeit aber auch größer sein als der Flusswiderstand des Entlüftungskanals der Fluidkammer mit dem hohen Flusswiderstand-Volumen-Produkt bezüglich des kompressiblen Mediums. Fig. 5a zeigt ein Ausführungsbeispiel, bei dem der Flusswiderstand des Verbindungskanals 14a bezüglich der Flüssigkeit angepasst ist, um einen (mehrfachen) Transfer eines Teilflüssigkeitsvolumens zu ermöglichen. Dabei findet ein Fluss von der Einlasskammer 50 in die Auslasskammer 52 statt, bis ein in der Auslasskammer 52 bestehender Unterdruck bzw. ein in der Einlasskammer 50 bestehender Überdruck ausgeglichen ist. Im Anschluss kommt der Fluss zum Erliegen, wobei Restflüssigkeit in der Einlasskammer 50 verbleiben kann. Dieser Vorgang kann ggf. wiederholt werden. Über den Unterdruck bzw. Überdruck kann dabei das zu transferierende Flüssigkeitsvolumen eingestellt werden. Somit ist ein mehrmaliges Überführen von definierten Subvolumina möglich.

Fig. 5b zeigt eine Vorrichtung, bei der der Flusswiderstand des Verbindungskanals 14b bezüglich der Flüssigkeit angepasst ist, um einen verzögerten Transfer einer Flüssigkeit aus der Einlasskammer 20 in die Auslasskammer 22 zu realisieren. _Der Verbindungskanal 14b beinhaltet dabei ein Siphonventil mit einem nachgeschalteten Flusswiderstand. Anfänglich können in einem weiten Spektrum Drehfrequenzen genutzt werden, ohne dass Flüssigkeit von der Einlasskammer 20 in die Auslasskammer 22 transferiert wird. Dieser Transfer wird durch das Siphonventil verhindert. Durch anschließenden Unterdruck in der Auslasskammer 22 bzw. Überdruck in der Einlasskammer 20 kann der Siphonventilkanal benetzt werden. Dabei findet jedoch noch kein Flüssigkeitstransfer aus der Einlasskammer 20 in die Auslasskammer 22 statt. Im Anschluss kann über eine Drehfrequenzerhöhung eine Entleerung der Flüssigkeit aus der Einlasskammer in die Auslasskammer gesteuert werden. In Kombination mit einer zweiten Einlasskammer, die über ein Siphonventil ohne Flusswiderstand mit der Auslasskammer verbunden ist, kann somit ein sequenzielles Schalten von Flüssigkeiten in die Auslasskammer realisiert werden, indem die Flüssigkeit aus der zweiten Einlasskammer bei Unterdruck in der Auslasskammer 22 bzw. Überdruck in den Einlasskammern direkt transferiert wird und die Flüssigkeit aus der ersten Einlasskammer 20 erst nach einer Drehfrequenzerhöhung.

Bei Ausführungsbeispielen kann der Verbindungskanal somit aus mehreren Segmenten bestehen, beispielsweise aus einem ersten Abschnitt mit geringem Flusswiderstand und einem zweiten Abschnitt mit hohem Flusswiderstand bezüglich der Flüssigkeit.

Bei den beschriebenen Ausführungsbeispielen sind die unterschiedlichen Flusswiderstand-Volumen-Produkte im Wesentlichen durch unterschiedliche Flusswiderstände der Entlüftungskanäle implementiert. Bei alternativen Ausführungsbeispielen können die unterschiedlichen Produkte alternativ oder zusätzlich durch unterschiedliche Volumina erreicht werden. Beispielsweise können die Entlüftungskanäle im Wesentlichen den gleichen Flusswiderstand aufweisen und das Volumen der einen Kammer kann zumindest viermal so groß wie das Volumen der anderen Kammer sein. Bei alternativen Ausführungsbeispielen können sowohl Flusswiderstände als auch Kammervolumen unterschiedlich sein, um ein entsprechendes Verhältnis zwischen den Produkten zu erhalten.

Es können mehrere Einlasskammern vorgesehen sein, die über Verbindungskanäle mit der Auslasskammer fluidisch verbunden sind. Die Verbindungskanäle können dabei in einen gemeinsamen Verbindungskanal münden, der in die Auslasskammer mündet. Die Einlasskammern, die Verbindungskanäle und die Auslasskammer können dabei ausgelegt sein, um die beschriebenen Wirkungen hinsichtlich der mehreren Einlasskammern und der Auslasskammer zu erreichen.

Ausführungsbeispiele der Erfindung können insbesondere auf dem Gebiet der zentrifugalen Mikrofluidik Anwendung finden, bei der es um die Prozessierung von Flüssigkeiten im Femtoliter- bis Milliliter-Bereich geht. Entsprechend können die Fluidikstrukturen geeignete Abmessungen im Mikrometerbereich für die Handhabung entsprechender Flüssigkeitsvolumina aufweisen. Insbesondere können Ausführungsbeispiele der Erfindung auf zentrifugal-mikrofluidischen Systemen Anwendung finden, wie sie beispielsweise unter der Bezeichnung "Lab-on-a-Disk" bekannt sind.

Wird hierin der Ausdruck radial verwendet, so ist jeweils radial bezüglich des Rotationszentrums R, um das ein Rotationskörper drehbar ist, gemeint. Im Zentrifugalfeld ist somit eine radiale Richtung von dem Rotationszentrum weg radial abfallend und eine radiale Richtung zu dem Rotationszentrum hin ist radial ansteigend. Ein Fluidkanal, dessen Anfang näher am Rotationszentrum liegt als dessen Ende, ist somit radial abfallend, während ein Fluidkanal, dessen Anfang weiter vom Rotationszentrum entfernt ist als dessen Ende, radial ansteigend ist. Ein Kanal, der einen radial ansteigenden Abschnitt aufweist, weist also Richtungskomponenten auf, die radial ansteigen bzw. radial nach innen verlaufen. Es ist klar, dass ein solcher Kanal nicht exakt entlang einer radialen Linie verlaufen muss, sondern in einem Winkel zu der radialen Linie oder gebogen verlaufen kann.

Allgemein können bei Ausführungsbeispielen der Erfindung unterschiedliche Flusswiderstände (fluidische Widerstände, hydraulische Widerstände) jeweiliger Fluidkanäle über unterschiedliche Strömungsquerschnitte erreicht werden. Bei alternativen Ausführungsbeispielen können unterschiedliche Strömungswiderstände auch durch andere Mittel erreicht werden, beispielsweise unterschiedliche Kanallängen, in die Kanäle integrierte Hindernisse und dergleichen. Ist ein Vergleich zwischen Strömungswiderständen angegeben, so ist dabei jeweils von dem Strömungswiderstand gegenüber dem gleichen Fluid auszugehen, falls nichts anderes angegeben ist. Ist hierin von einem Fluidkanal die Rede, so ist eine Struktur gemeint, deren Längenabmessung von einem Fluideinlass zu einem Fluidauslass größer ist, beispielsweise mehr als 5-mal oder mehr als 10-mal größer, als die Abmessung bzw. Abmessungen, die den Strömungsquerschnitt definiert bzw. definieren. Somit kann ein Fluidkanal einen Strömungswiderstand für ein Durchströmen desselben von dem Fluideinlass zu dem Fluidauslass aufweisen. Dagegen ist eine Fluidkammer hierin eine Kammer die solche Abmessungen aufweisen kann, dass ein relevanter Strömungswiderstand in derselben nicht auftritt.

Unter den Ausdruck Flüssigkeit bzw. flüssigen Phase, wie er hierin verwendet wird, fallen, wie Fachleuten offensichtlich ist, auch Flüssigkeiten, die Feststoffbestandteile beinhalten, wie z.B. Suspensionen und biologische Proben.

Bezug nehmend auf die Fig. 6 und 7 werden nun Beispiele von zentrifugal-mikrofluidischen Systemen beschrieben, bei denen die Erfindung verwendet werden kann.

Fig. 6 zeigt eine Vorrichtung mit einem Fluidikmodul 110 in Form eines Rotationskörpers, der ein Substrat 112 und einen Deckel 114 aufweist. Das Substrat 112 und der Deckel 114 können in Draufsicht kreisförmig sein, mit einer mittigen Öffnung, über die der Rotationskörper 110 über eine übliche Befestigungseinrichtung 116 an einem rotierenden Teil 118 einer Antriebsvorrichtung 120 angebracht sein kann. Das rotierende Teil 118 ist drehbar an einem stationären Teil 122 der Antriebsvorrichtung 120 gelagert. Bei der Antriebsvorrichtung 120 kann es beispielsweise um eine herkömmliche Zentrifuge, die eine einstellbare Drehgeschwindigkeit aufweisen kann, oder auch ein CD- oder DVD-Laufwerk handeln. Eine Steuereinrichtung 124 kann vorgesehen sein, die ausgelegt ist, um die Antriebsvorrichtung 120 zu steuern, um den Rotationskörper 110 mit einer Rotation oder mit Rotationen unterschiedlichen Drehfrequenzen zu beaufschlagen. Die Steuereinrichtung 124 kann, wie für Fachleute offensichtlich ist, beispielsweise durch eine entsprechend programmierte Recheneinrichtung oder eine anwenderspezifische integrierte Schaltung implementiert sein. Die Steuereinrichtung 124 kann ferner ausgelegt sein, um auf manuelle Eingaben durch einen Benutzer hin die Antriebsvorrichtung 120 zu steuern, um die erforderlichen Rotationen des Rotationskörpers zu bewirken. In jedem Fall kann die Steuereinrichtung 124 konfiguriert sein, um die Antriebsvorrichtung 120 zu steuern, um den Rotationskörper mit der erforderlichen Rotation zu beaufschlagen, um Ausführungsbeispiele der Erfindung, wie sie hierin beschrieben sind, zu implementieren. Als Antriebsvorrichtung 120 kann eine herkömmliche Zentrifuge mit nur einer Drehrichtung verwendet werden.

Der Rotationskörper 110 weist die erforderlichen Fluidikstrukturen auf. Die erforderlichen Fluidikstrukturen können durch Kavitäten und Kanäle in dem Deckel 114, dem Substrat 112 oder in dem Substrat 112 und dem Deckel 114 gebildet sein. Bei Ausführungsbeispielen können beispielsweise Fluidikstrukturen in dem Substrat 112 abgebildet sein, während Einfüllöffnungen und Entlüftungsöffnungen in dem Deckel 114 gebildet sind. Das strukturierte Substrat kann (inklusive Einfüllöffnungen und Entlüftungsöffnungen) oben angeordnet und der Deckel unten angeordnet.

Bei einer alternativen in Fig. 7 gezeigten Vorrichtung sind Fluidikmodule 132 in einen Rotor 130 eingesetzt und bilden zusammen mit dem Rotor 130 den Rotationskörper 110. Die Fluidikmodule 132 können jeweils ein Substrat und einen Deckel aufweisen, in denen wiederum entsprechende Fluidikstrukturen gebildet sein können. Der durch den Rotor 130 und die Fluidikmodule 132 gebildete Rotationskörper 110 ist wiederum durch eine Antriebsvorrichtung 120, die durch die Steuereinrichtung 124 gesteuert wird, mit einer Rotation beaufschlagbar.

In den Figuren 5 und 6 ist das Rotationszentrum, um das das Fluidikmodul bzw. der Rotationskörper drehbar ist, wiederum mit R bezeichnet.

Das Fluidikmodul bzw. der Rotationskörper, das bzw. der die Fluidikstrukturen aufweist, können aus einem beliebigen geeigneten Material gebildet sein, beispielsweise einem Kunststoff, wie PMMA (Polymethylmethacrylat), PC (Polycarbonat), PVC (Polyvinylchlorid) oder PDMS (Polydimethylsiloxan), Glas oder dergleichen. Der Rotationskörper 110 kann als eine zentrifugalmikrofluidische Plattform betrachtet werden. Das Fluidikmodul bzw. der Rotationskörper kann aus einem Thermoplast, wie z.B. PP (Polypropylen), PC, COP (Cyclic Olefin Polymer), COC (Cyclo Olefin Copolymer) oder PS (Polystyrol) gebildet sein.

Somit wird ein Schaltmechanismus implementiert, der bei konstanter Drehfrequenz betrieben werden kann. Das Aktivieren des Schalters kann durch Wahl des fluidischen Widerstands, der Viskosität der Fluide, der Heiz-/Kühl-Rate und durch die Drehfrequenz eingestellt werden.

Bei Ausführungsbeispielen der Erfindung kann das Verhältnis zwischen den Flusswiderstand-Volumen-Produkten entsprechend der jeweiligen Widerstände für jeweils das gleiche Fluid, wie z.B. Luft, bestimmt werden.

Bei Ausführungsbeispielen ist keinerlei Oberflächen-Modifikation des Testträgers notwendig. Neben dem Schalten kann das Prinzip der dynamischen Entlüftung auch für eine Verzögerung-Funktion genutzt werden. Beispielsweise kann ein Fluss eines ersten Fluids mit einer hohen Viskosität (wie z.B. Wasser) in eine Kammer mit Entlüftung für ein zweites Fluid mit geringer Viskosität (wie z.B. Luft) durch den fluidischen Widerstand der Entlüftungskanäle beeinflusst werden, wobei ein Fluss des ersten Fluids in die Kammer minimiert werden kann. Die Volumenströme sind bei niedrigen Drehgeschwindigkeiten wesentlich genauer einstellbar, und es besteht keine Gefahr einer Blasen- oder Plug-Bildung im Fluidik-Kanal für das Fluid hoher Viskosität. Das zugrundeliegende Prinzip ist sowohl für hochbenetzende als auch nichtbenetzende Flüssigkeiten anwendbar. Das zugrundeliegende Prinzip kann durch geeignete Wahl der fluidischen Widerstände im System auch für höher-viskose Flüssigkeiten verwendet werden.

Im Gegensatz zu kapillaren Siphonventilen basiert somit erfindungsgemäß ein Schaltprinzip nicht auf Kapillardrücken, die unterhalb einer Schaltfrequenz Zentrifugaldrücke dominieren. Das Schaltprinzip ist somit nicht nur bei Flüssigkeits-Materialkombinationen anwendbar, bei denen sich ein Kontaktwinkel < 90 ergibt, so dass ein solcher nicht durch Zugabe von Additiven zur Flüssigkeit oder durch Oberflächenbeschichtung erzeugt werden muss, was evtl. nicht mit den zu integrierenden (biochemischen) Abläufen kompatibel ist bzw. Aufbau- und Verbindungskosten (AVT) des Systems signifikant erhöht. Zudem benötigen Ausführungsbeispiele der Erfindung keine variable Drehgeschwindigkeit, die ggf. nicht durch alle Prozessiergeräte gegeben ist.

Im Gegensatz zu zentrifugo-pneumatischen Ventilen benötigt das Schaltprinzip erfindungsgemäß kein endständiges, geschlossenes Luftvolumen, so dass eine Integration als letzter Schaltvorgang in einem fluidischen Netzwerk nicht erforderlich ist. Zudem sind bei zentrifugo-pneumatischen Ventilen variable Drehgeschwindigkeiten notwendig, was erfindungsgemäß nicht erforderlich ist.

Im Gegensatz zu zentrifugo-pneumatischen Ventilen mit auflösbarer Membran sind erfindungsgemäß weder variable Drehgeschwindigkeiten erforderlich, noch muss die Flüssigkeit zum Auflösen einer wasserlöslichen Membran geeignet sein. Somit kann verhindert werden, dass mögliche Lösungsprodukte der Membran mit der Flüssigkeit vermischt werden. Erhöhte AVT-Kosten, wie sie bei solchen auflösbaren Membranen erforderlich sind, um nicht auf eine endständige Kammer angewiesen zu sein, können bei Ausführungsbeispielen der Erfindung vermieden werden.

Bei hydraulischen Ventilen, wie sie z.B. bei [4] beschrieben sind, wird ein geschlossenes Luftvolumen benötigt, sodass das Ventil nicht frei in fluidische Netzwerke integrierbar ist, was erfindungsgemäß nicht erforderlich ist. Zudem ist der Schalter gemäß [4] nicht gegen hohe Zentrifugaldrücke robust, die gegebenenfalls von der Anwendung (z.B. Blutplasmaseparation) gefordert sein können.

Auch gegenüber zeitgesteuerten Ventilen, wie sie bei [5] beschrieben sind, ist erfindungsgemäß ein deutlich reduzierter Aufwand möglich. Es wird keine Integration eines Papierstreifens sowie zweier auflösbarer Membranen pro Ventil, was zu einem hohen AVT-Aufwand führt, benötigt. Ferner sind, obwohl bei solchen zeitgesteuerten Ventilen das Schaltprinzip bei konstanter Drehgeschwindigkeit funktional ist, die Schaltzeitpunkte durch die Dimensionierung des Papierstreifens und das Auflöseverhalten der Membranen definiert und erlauben keine nachträgliche Adaption durch z.B. eine Änderung des Temperaturprofils. Zudem erfordert das Schaltprinzip eine zusätzliche Hilfsflüssigkeit, die entweder vorgelagert oder vom Anwender hinzugefügt werden muss. Solche Maßnahmen sind erfindungsgemäß nicht erforderlich.

Auch bei Wasseruhr-Ventilen (siehe [6]) erfordert das Schaltprinzip eine zusätzliche Hilfsflüssigkeit, die entweder vorgelagert oder vom Anwender hinzugefügt werden muss. Obwohl ein Betrieb bei konstanter Drehgeschwindigkeit ermöglicht wird, bedarf es einer sehr feinen Abstimmung von Frequenzprotokoll, Flüssigkeiten und Geometrien, damit sowohl die Hilfsflüssigkeit nicht in die Belüftungskanäle eingezogen wird, als auch die Belüftungskanäle vollständig entnetzen, sobald der Füllpegel unter die Belüftungsöffnung fällt. Der Schalter kann lediglich bei geschlossenen Luftvolumina eingesetzt werden, sodass er nicht frei in fluidische Netzwerke integrierbar ist. Auch gegenüber solchen Ventilen sind Ausführungsbeispiele der Erfindung deutlich weniger aufwändig und ermöglichen einen flexibleren Einsatz.

Bei Vakuum/Kompressionsventilen, wie sie bei [7] beschrieben sind, benötigt das Schaltprinzip einen Herstellungsprozess, in dem geschmolzenes Paraffin-Wachs punktgenau positioniert, ausgehärtet und die Scheibe dann weiter prozessiert werden kann, sodass die AVT-Kosten deutlich erhöht werden. Zudem benötigt die Schalterbetätigung eine lokale Heizquelle, die das Paraffin-Wax aufschmelzen kann (aktiver Schalter), Dieses erhöht die Komplexität des Prozessiergeräts. Obwohl die Funktionalität bei konstanter Drehgeschwindigkeit gegeben ist, ist der Schalter nicht gegen hohe Zentrifugaldrücke robust, die ggf. von der Anwendung (z.B. Blutplasmaseparation) gefordert sein kann. Zusätzlich kann der Schalter lediglich bei geschlossenen Luftvolumina eingesetzt werden, sodass er nicht frei in fluidische Netzwerke integrierbar ist. Auch gegenüber solchen Ventilen ermöglicht die Erfindung deutlich ein weniger aufwändiges Verfahren und flexibleren Einsatz.

Bei thermo-pneumatischen Ventilen, wie sie aus [8] bekannt sind, benötigt das Schaltprinzip ein großes, separates Luftvolumen, was wertvollen Platz auf der limitierten Scheibe konsumiert. Zudem ist ein geschlossenes Luftvolumen notwendig, sodass das Ventil nicht frei in fluidische Netzwerke integrierbar ist. Das Prozessiergerät muss lokales Heizen ermöglichen, was dieses komplexer und kostspieliger macht. Auch gegenüber solchen Ventilen ermöglicht die Erfindung ein deutlich weniger aufwändiges Verfahren und einen flexibleren Einsatz.

Im Folgenden werden kurz typische Werte Geometrien für die Fluidikstrukturen angegeben.

Bei einer typischen Ausführung der in den Figuren 2 und 3 gezeigten Vorrichtungen kann der Auslasskammerentlüftungskanal einen Querschnitt von 100 $\mu$m mal 100 $\mu$m mit einer Länge von 30 mm aufweisen. Das Volumen der Auslasskammer kann bei 900 $\mu$l liegen, das Volumen der Einlasskammer kann bei 500 $\mu$l liegen. Der Verbindungskanal kann einen Querschnitt von 300 $\mu$m mal 300 $\mu$m mit einer Länge von 10 mm aufweisen. Der Einlasskammerentlüftungskanal kann einen Querschnitt von 600 $\mu$m mal 600 $\mu$m mit einer Länge von 30 mm aufweisen. Der relevante Betrag des Druckunterschiedes $|p1(t) - p2(t)|$ kann größer als 5 mbar sein.

Bei einer typischen Ausführung der in den Fig. 4a und 4b gezeigten Vorrichtung kann der Auslasskammerentlüftungskanal einen Querschnitt von 50 $\mu$m mal 50 $\mu$m mit einer Länge von 30 mm aufweisen. Das Volumen der Auslasskammer kann bei 900 $\mu$l liegen, das Volumen der Einlasskammer kann bei 500 $\mu$l liegen. Der Verbindungskanal kann einen Querschnitt von 300 $\mu$m mal 300 $\mu$m mit einer Länge von 10 mm aufweisen. Der Einlasskammerentlüftungskanal kann einen Querschnitt von 600 $\mu$m mal 600 $\mu$m mit einer Länge von 30 mm aufweisen.

Somit wird ein SchaltMechanismus geschaffen, der durch die Dimensionen der Kammern sowie durch die Fluidwiderstände der Kanäle durch eine Temperaturänderung bestimmt wird. So kann ein Schaltmechanismus, ausgelöst durch die Dynamik von Ausgleichsvorgängen von Fluiden aufgrund einer lokalen oder globalen Volumenänderung bzw. Druckänderung bei einer konstanten Drehfrequenz realisiert werden. Ferner, kann durch ein Ausführungsbeispiel eine Flussrate durch eines ersten Fluides von einer Einlasskammer in eine Auslasskammer durch die Wahl der Volumina der Kammern sowie die Fluidwiderstände beeinflusst werden, um einen Verzögerungsschalter zu realisieren.

<u>Literaturliste</u>

[1] Schembri, C. T.; Burd, T. L.; Kopf-Sill, A. R.; Shea, L. R.; Braynin, B. (1995): Centrifugation and capillarity integrated into a multiple analyte whole blood analyser; in: The Journal of Automatic Chemistry 17 (3), S. 99-104. DOI: 10.1155/S1463924695000174

[2] Mark, Daniel; Metz, Tobias; Haeberle, Stefan; Lutz, Sascha; Ducrée, Jens; Zengerle, Roland; Stetten, Felix von (2009): Centrifugo-pneumatic valve for metering of highly wetting liquids on centrifugal microfluidic platforms; in: Lab Chip 9 (24), S. 3599. DOI: 10.1039/b914415c

[3] Gorkin III, Robert; Nwankire, Charles E.; Gaughran, Jennifer; Zhang, Xin; Donohoe, Gerard G.; Rook, Martha et al. (2012): Centrifugo-pneumatic valving utilizing dissolvable films; in: Lab Chip 12 (16), S. 2894. DOI: 10.1039/C2LC20973J

[4] Siegrist, Jonathan; Gorkin, Robert; Bastien, Martine; Stewart, Gale; Peytavi, Regis; Kido, Horacio et al. (2010): Validation of a centrifugal microfluidic sample lysis and homogenization platform for nucleic acid extraction with clinical samples; in: Lab Chip 10 (3), S. 363. DOI: 10.1039/b913219h

[5] Kinahan, D. J.; Kearney, S. M.; Glynn, M. T.; Ducree, Jens (2013): IMBIBITION-MODULATED EVENT-TRIGGERING OF CENTRIFUGO-PNEUMATIC CASCAD-ING FOR MULTI-STAGE DILUTION SERIES

[6] Ukita, Yoshiaki; Ishizawa, Masaki; Takamura, Yuzuru; Utsumi, Yuichi (2012): IN-TERNALLY TRIGGERD MULTISTEP FLOW SEQUENCERS USING CLEPSY-DRA

[7] Al-Faqheri, Wisam; Ibrahim, Fatimah; Thio, Tzer Hwai Gilbert; Moebius, Jacob; Joseph, Karunan; Arof, Hamzah et al. (2013): Vacuum/Compression Valving (VCV) Using Parrafin-Wax on a Centrifugal Microfluidic CD Platform; in: PLoS ONE 8 (3), S. e58523. DOI: 10.1371/journal.pone.0058523

[8] Abi-Samra, Kameel; Clime, Liviu; Kong, Ling; Gorkin, Robert; Kim, Tae-Hyeong; Cho, Yoon-Kyoung; Madou, Marc (2011): Thermo-pneumatic pumping in centrifugal microfluidic platforms; in: Microfluid Nanofluid 11 (5), S. 643-652. DOI: 10.1007/s10404-011-0830-5

[9] US 2008/0149190 A1

[10] WO 2013/045631 A1

[11] M. Focke; F. Stumpf; G. Roth; R. Zengerle; F. von Stetten: Centrifugal microfluidic system for primary amplification and secondary real-time PCR; in: Lab Chip, 2010, 10, Seiten 3210 - 3212

[12] M. Richter, P. Woias, D. Weiß, Microchannels for applications in liquid dosing and flow-rate measurement, Sensors and Actuators A: Physical 62 (1997) 480-483.

**Patentansprüche**

1. Verfahren zur Fluidhandhabung mit folgenden Merkmalen:

   Bereitstellen einer Fluidhandhabungsvorrichtung, die folgende Merkmale aufweist:

   Mikrofluidikstrukturen, die zumindest eine Einlasskammer (20, 50), eine Auslasskammer (22, 52) und einen Verbindungskanal (24, 54), der die Einlasskammer (20, 50) mit der Auslasskammer (22, 52) fluidisch verbindet, aufweisen, wobei die Einlasskammer (20, 50) in einem Ausgangszustand vollständig mit zumindest einer Flüssigkeit oder teilweise mit zumindest einer Flüssigkeit und teilweise mit einem kompressiblen Medium gefüllt ist und die Auslasskammer (22, 52) zumindest teilweise mit dem kompressiblen Medium gefüllt ist, wobei eine der Einlasskammer (20, 50) und der Auslasskammer (22, 52) einen solchen Entlüftungskanal (26, 28, 56, 58) aufweist, dass ein erstes Flusswiderstand-Volumen-Produkt der Entlüftung dieser Kammer für das kompressible Medium mindestens 6700 $\frac{N \cdot s}{m^2}$ groß ist, wobei die andere der Einlasskammer (20, 50) und der Auslasskammer (22, 52) entlüftet ist und ein zweites Flusswiderstand-Volumen-Produkt aufweist, wobei das erste Flusswiderstand-Volumen-Produkt um einen Faktor von mindestens vier größer ist als das zweite Flusswiderstand-Volumen-Produkt, einer Betätigungseinrichtung zum Betätigen der Mikrofluidikstrukturen ausgehend von dem Ausgangszustand, wobei das jeweilige Flusswiderstand-Volumen-Produkt definiert ist durch das Produkt aus dem Volumen der jeweiligen Kammer und einem fluidischen Widerstand $R_{fl}$ des jeweiligen Entlüftungskanals (26, 28, 56, 58), mit

   $$R_{fl} = C_{geometry} \cdot \frac{\eta l}{A^2}$$

   wobei $C_{geometry}$ ein geometrieabhängiger Faktor, η die Viskosität des kompressiblen Mediums, I die Länge des jeweiligen Entlüftungskanals (26, 28, 56, 58) und A die Querschnittsfläche des jeweiligen Entlüftungskanals (26, 28, 56, 58) ist; und

ausgehend von dem Ausgangszustand, Betätigen der Mikrofluidikstrukturen durch Bewirken einer Temperaturänderung oder durch Bewirken einer mechanischen Kompression oder Dekompression des kompressiblen Mediums, um aufgrund der unterschiedlichen Druckausgleichsraten der Einlasskammer (20, 50) und der Auslasskammer (22, 52) einen Druckunterschied zwischen dem kompressiblen Medium in der Einlasskammer (20, 50) und dem kompressiblen Medium in der Auslasskammer (22, 52) von mindestens 30 Pa zu bewirken, um dadurch die in dem Verbindungskanal (24) implementierte Ventilvorrichtung zu schalten, so dass Flüssigkeit von der Einlasskammer (20, 50) in die Auslasskammer (22, 52) gelangt, oder um dadurch dem durch die Betätigung induzierten Fluss von der Einlasskammer (20, 50) in die Auslasskammer (22, 52) temporär entgegenzuwirken.

2. Verfahren nach Anspruch 1, bei dem in dem Verbindungskanal (24) die Ventilvorrichtung implementiert ist, wobei in dem Ausgangszustand die Ventilvorrichtung verhindert, dass Flüssigkeit aus der Einlasskammer (20) in die Auslasskammer (22) gelangt, wobei die Kammer, deren Flusswiderstand-Volumen-Produkt der Entlüftung dieser Kammer für das kompressible Medium mindestens 6700 $\frac{N \cdot s}{m^2}$ groß ist, die Einlasskammer (20) ist, wobei bei dem Betätigen eine solche Druckerhöhung des kompressiblen Mediums bewirkt wird, dass durch eine Verzögerung eines Druckausgleichs in der Einlasskammer (20) temporär ein Überdruck von mindestens 30 Pa in dem kompressiblen Medium in der Einlasskammer (20) gegenüber dem kompressiblen Medium in der Auslasskammer (22) bewirkt wird.

3. Verfahren nach Anspruch 2, bei dem das Betätigen ein Aufheizen des kompressiblen Mediums mit einer Heizrate von ≥ 0,1 K/s aufweist.

4. Verfahren nach Anspruch 1, bei dem in dem Verbindungskanal (24) die Ventilvorrichtung implementiert ist, wobei in dem Ausgangszustand die Ventilvorrichtung verhindert, dass Flüssigkeit aus der Einlasskammer (20) in die Auslasskammer (22) gelangt, wobei die Kammer, deren Flusswiderstand-Volumen-Produkt der Entlüftung dieser Kammer für das kompressible Medium mindestens 6700 $\frac{N \cdot s}{m^2}$ groß ist, die Auslasskammer (22) ist, wobei bei dem Betätigen eine solche Druckverringerung in dem kompressiblen Medium bewirkt wird, dass durch eine Verzögerung eines Druckausgleichs in der Auslasskammer (22) temporär ein Unterdruck von mindestens 30 Pa in dem kompressiblen Medium in der Auslasskammer (22) gegenüber dem kompressiblen Medium in der Einlasskammer (20) bewirkt wird.

5. Verfahren nach Anspruch 4, bei dem das Betätigen ein Abkühlen des kompressiblen Mediums mit einer Abkühlrate von ≥ 0,1 K/s aufweist.

6. Verfahren nach Anspruch 3 oder Anspruch 5, bei dem das Aufheizen oder Abkühlen des kompressiblen Mediums global durch ein Aufheizen bzw. Abkühlen der Umgebungsluft bewirkt wird.

7. Verfahren nach Anspruch 3 oder Anspruch 5, bei dem das Aufheizen oder Abkühlen des kompressiblen Mediums lokal in der Einlasskammer (20) und/oder Auslasskammer (22) bewirkt wird.

8. Verfahren nach Anspruch 1, bei dem einem durch Betätigen der Mikrofluidikstrukturen induzierten Fluss von der Einlasskammer (50) in die Auslasskammer (52) temporär entgegengewirkt wird, wobei die Kammer, deren Flusswiderstand-Volumen-Produkt der Entlüftung dieser Kammer für das kompressible Medium mindestens 6700 $\frac{N \cdot s}{m^2}$ groß ist, die Auslasskammer (52) ist und wobei der Druckunterschied durch eine mechanische Kompression des kompressiblen Mediums in der Auslasskammer (52) bewirkt wird.

9. Verfahren nach Anspruch 1, bei dem einem durch Betätigen der Mikrofluidikstrukturen induzierten Fluss von der Einlasskammer (50) in die Auslasskammer (52) temporär entgegengewirkt wird, wobei die Kammer, deren Flusswiderstand-Volumen-Produkt der Entlüftung dieser Kammer für das kompressible Medium mindestens 6700 $\frac{N \cdot s}{m^2}$ groß ist, die Einlasskammer (50) ist und wobei der Druckunterschied durch eine mechanische Dekompression des kompressiblen Mediums in der Einlasskammer (50) bewirkt wird.

10. Verfahren nach Anspruch 8 oder 9, bei dem das Betätigen ein Beaufschlagen der Flüssigkeit in der Einlasskammer (50) mit einer Kraft aufweist, durch die die Flüssigkeit in den Verbindungskanal (54) getrieben wird, wodurch eine Druckerhöhung in dem kompressiblen Medium in der Auslasskammer (52) durch eine mechanische Kompression des kompressiblen Mediums in der Auslasskammer (52) bewirkt wird, wenn die Auslasskammer (52) die Kammer, deren Flusswiderstand-Volumen-Produkt der Entlüftung dieser Kammer für das kompressible Medium

$$\frac{N \cdot s}{m^2}$$

mindestens 6700 $\frac{N \cdot s}{m^2}$ groß ist, ist, oder wodurch eine Druckverringerung in dem kompressiblen Medium in der Einlasskammer (50) durch eine mechanische Dekompression des kompressiblen Mediums in der Einlasskammer (50) bewirkt wird, wenn die Einlasskammer (50) die eine der Einlasskammer (50) und der Auslasskammer (52) ist.

11. Verfahren nach Anspruch 10, bei dem die Beaufschlagung der Flüssigkeit mit einer Kraft durch eine Erhöhung einer Rotationsfrequenz, mit der die Mikrofluidikstrukturen gedreht werden, erfolgt.

12. Verfahren nach einem der Ansprüche 1 bis 11, bei dem das Bereitstellen der Fluidhandhabungsvorrichtung das Bereitstellen einer Fluidhandhabungsvorrichtung aufweist, bei der das Flusswiderstand-Volumen-Produkt ein erstes Flusswiderstand-Volumen-Produkt ist, wobei die andere der Einlasskammer (20, 50) und der Auslasskammer (22, 52) einen Entlüftungskanal (26, 28, 56, 58) und somit ein zweites Flusswiderstand-Volumen-Produkt der Entlüftung dieser Kammer für das kompressible Medium aufweist, wobei das erste Flusswiderstand-Volumen-Produkt mindestens viermal größer ist als das zweite Flusswiderstand-Volumen-Produkt.

13. Verfahren nach einem der Ansprüche 1 bis 12, bei dem das Bereitstellen der Fluidhandhabungsvorrichtung das Bereitstellen einer Fluidhandhabungsvorrichtung aufweist, bei der die Mikrofluidikstrukturen in einem Fluidikmodul gebildet sind, das einen Rotationskörper darstellt oder das in einen Rotationskörper einsetzbar ist, und die ferner eine Antriebseinrichtung aufweist, die ausgebildet ist, um das Fluidikmodul und damit die Mikrofluidikstrukturen mit einer Rotation zu beaufschlagen.

14. Verfahren nach einem der Ansprüche 1 bis 13, bei dem das Bereitstellen der Fluidhandhabungsvorrichtung das Bereitstellen einer Fluidhandhabungsvorrichtung aufweist, bei der der Verbindungskanal (24) einen Siphon oder ein Kapillarventil aufweist.

## Claims

1. Method for handling a fluid, comprising:
providing a fluid handling device comprising:

micro fluidic structures comprising at least one inlet chamber (20, 50), one outlet chamber (22, 52), and a connecting duct (24, 54) which fluidically connects the inlet chamber (20, 50) to the outlet chamber (22, 52),
wherein in an initial state, the inlet chamber (20, 50) is completely filled with at least a liquid or partly filled with at least a liquid and partly filled with a compressible medium, and the outlet chamber (22, 52) is at least partly filled with the compressible medium,
wherein one of the inlet chamber (20, 50) and the outlet chamber (22, 52) comprises such a venting duct (26, 28, 56, 58) that a first flow resistance/volume product of venting of said chamber for the compressible medium amounts

$$\frac{N \cdot s}{m^2}$$

to at least 6700 $\frac{N \cdot s}{m^2}$, the other of the inlet chamber (20, 50) and of the outlet chamber (22, 52) being vented, and a second flow resistance/volume product, the first flow resistance/volume product being larger than the second flow resistance/volume product by a factor of at least four, an actuation means for actuating the micro fluidic structures on the basis of the initial state, wherein the respective flow resistance/volume product is defined by the product resulting from the volume of the respective chamber and a fluidic resistance $R_{fl}$ of the respective venting duct (26, 28, 56, 58), comprising

$$R_{fl} = C_{geometry} \cdot \frac{\eta l}{A^2}$$

wherein $C_{geometry}$ is a geometry-dependent factor, $\eta$ is the viscosity of the compressible medium, l is the length of the respective venting duct (26, 28, 56, 58), and A is the cross sectional area of the respective venting duct (26, 28, 56, 58); and
on the basis of the initial state, actuating the micro fluid structures by causing a change in temperature or by causing mechanical compression or decompression of the compressible medium so as to cause, due to different pressure equalization rates of the inlet chamber (20, 50) and of the outlet chamber (22, 52), a pressure difference of at least 30 Pa between the compressible medium within the inlet chamber (20, 50) and the compressible medium within the outlet chamber (22, 52) so as to thereby switch the valve device implemented into the connecting duct (24), such that liquid gets from the inlet chamber (20, 50) into the outlet chamber (22, 52), or so as to thus temporarily counteract the flow, caused by the actuation, from the inlet chamber (20, 50) into the outlet chamber (22, 52).

2. Method as claimed in claim 1, wherein the valve device is implemented in the connecting duct (24), the valve device preventing, in the initial state, liquid from getting from the inlet chamber (20) into the outlet chamber (22), wherein the chamber whose flow resistance/volume product of the venting of said chamber for the compressible medium amounts to at least 6700 $\frac{N \cdot s}{m^2}$ is the inlet chamber (20), wherein, in actuating, such a pressure increase of the compressible medium is caused that by means of a delay in pressure equalization within the inlet chamber (20), an excess pressure of at least 30 Pa in the compressible medium within the inlet chamber (20) is temporarily caused as compared to the compressible member within the outlet chamber (22).

3. Method as claimed in claim 2, wherein actuating comprises heating of the compressible medium at a heating rate of $\geq$ 0,1 K/s.

4. Method as claimed in claim 1, wherein the valve device is implemented in the connecting duct (24), the valve device preventing, in the initial state, liquid from getting from the inlet chamber (20) into the outlet chamber (22), wherein the chamber whose flow resistance/volume product of the venting of said chamber for the compressible medium amounts to at least 6700 $\frac{N \cdot s}{m^2}$ is the outlet chamber (22), wherein, in actuating, such a pressure decrease in the compressible medium is caused that by means of a delay in pressure equalization within the outlet chamber (22), a negative pressure of at least 30 Pa in the compressible medium within the outlet chamber (22) is temporarily caused as compared to the compressible member within the inlet chamber (20).

5. Method as claimed in claim 4, wherein actuating comprises cooling of the compressible medium at a cooling rate of $\geq$ 0,1 K/s.

6. Method as claimed in claim 3 or claim 5, wherein heating or cooling of the compressible medium is caused globally by heating or cooling the ambient air.

7. Method as claimed in claim 3 or claim 5, wherein heating or cooling the compressible medium is caused locally within the inlet chamber (20) and/or outlet chamber (22).

8. Method as claimed in claim 1, wherein a flow, caused by actuating the micro fluidic structures, from the inlet chamber (50) into the outlet chamber (52) is temporarily counteracted, wherein the chamber whose flow resistance/volume product of the venting of said chamber for the compressible medium amounts to at least 6700 $\frac{N \cdot s}{m^2}$ is the outlet chamber (52), and wherein the pressure difference is caused by means of mechanical compression of the compressible medium within the outlet chamber (52).

9. Method as claimed in claim 1, wherein a flow, caused by actuating the micro fluidic structures, from the inlet chamber (50) into the outlet chamber (52) is temporarily counteracted, wherein the chamber whose flow resistance/volume product of the venting of said chamber for the compressible medium amounts to at least 6700 $\frac{N \cdot s}{m^2}$ is the inlet chamber (50), and wherein the pressure difference is caused by means of mechanical decompression of the compressible medium within the inlet chamber (50).

10. Method as claimed in claim 8 or 9, wherein actuating comprises subjecting the liquid within the inlet chamber (50) to a force by which the liquid is driven into the connecting duct (54), whereby an increase in pressure in the compressible medium within the outlet chamber (52) is caused by mechanical compression of the compressible medium within the outlet chamber (52) if the outlet chamber (52) is the chamber whose flow resistance/volume product of the venting of said chamber for the compressible medium amounts to at least 6700 $\frac{N \cdot s}{m^{2'}}$, or whereby a reduction in pressure in the compressible medium within the inlet chamber (50) is caused by mechanical decompression of the compressible medium within the inlet chamber (50) if the inlet chamber (50) is the one of the inlet chamber (50) and the outlet chamber (52).

11. Method as claimed in claim 10, wherein subjecting the liquid to a force is carried out by increasing a rotational frequency at which the micro fluidic structures are rotated.

12. Method as claimed in any of claims 1 to 11, wherein providing the fluid handling device comprises providing a fluid handling device in which the flow resistance/volume product is a first flow resistance/volume product, wherein the other one of the inlet chamber (20, 50) and of the outlet chamber (22, 52) comprises a venting duct (26, 28, 56, 58) and thus comprises a second flow resistance/volume product of venting this chamber for the compressible medium, the first flow resistance/volume product being at least four times larger than the second flow resistance/volume product.

**13.** Method as claimed in any of claims 1 to 12, wherein providing the fluid handling device comprises providing a fluid handling device in which the micro fluidic structures are formed within a fluidic module which represents a body of rotation or may be inserted into a body of rotation, and which further comprises a drive means configured to subject the micro fluidic module and, thus, the fluidic structures to rotation.

**14.** Method as claimed in any of claims 1 to 13, wherein providing the fluid handling device comprises providing a fluid handling device in which the connecting duct (24) comprises a siphon or a capillary valve.

**Revendications**

**1.** Procédé de manipulation de fluide, aux caractéristiques suivantes consistant à:

prévoir un dispositif de manipulation de fluide qui présente les caractéristiques suivantes:

des structures micro-fluidiques qui présentent au moins une chambre d'entrée (20, 50), une chambre de sortie (22, 52) et un canal de liaison (24, 54) qui relie de manière fluidique la chambre d'entrée (20, 50) à la chambre de sortie (22, 52), où la chambre d'entrée (20, 50) est remplie, dans un état initial, entièrement d'au moins un liquide ou partiellement d'au moins un liquide et partiellement d'un milieu compressible et la chambre de sortie (22, 52) est remplie au moins partiellement du milieu compressible,

dans lequel l'une parmi la chambre d'entrée (20, 50) et la chambre de sortie (22, 52) présente un canal de ventilation (26, 28, 56, 58) tel qu'un premier produit de résistance à la circulation-volume de la ventilation de cette chambre pour le milieu compressible soit d'au moins 6700 $\frac{N \cdot s}{m^2}$, dans lequel l'autre parmi la chambre d'entrée (20, 50) et la chambre de sortie (22, 52) est ventilée et présente un deuxième produit de résistance à la circulation-volume, dans lequel le premier produit de résistance à la circulation-volume est supérieur d'un facteur d'au moins quatre au deuxième produit de résistance à la circulation-volume,

un moyen d'actionnement destiné à actionner les structures micro-fluidiques en partant de l'état initial,

dans lequel le produit de résistance à la circulation-volume respectif est défini par le produit du volume de la chambre respective et d'une résistance fluidique $R_{fl}$ du canal de ventilation respectif (26, 28, 56, 58), où

$$R_{fl} = C_{geometry} \cdot \frac{\eta^l}{A^2}$$

où $C_{geometry}$ est un facteur dépendant de la géométrie, $\eta$ est la viscosité du milieu compressible, 1 est la longueur du canal de ventilation respectif (26, 28, 56, 58) et A est la section transversale du canal de ventilation respectif (26, 28, 56, 58); et

en partant de l'état initial, actionner les structures micro-fluidiques en provoquant un changement de température ou en provoquant une compression ou une décompression mécanique du milieu compressible pour provoquer, sur base des différents taux de compensation de pression de la chambre d'entrée (20, 50) et de la chambre de sortie (22, 52), une différence de pression entre le milieu compressible dans la chambre d'entrée (20, 50) et le milieu compressible dans la chambre de sortie (22, 52) d'au moins 30 Pa, pour actionner ainsi le dispositif de soupape mis en œuvre dans le canal de liaison (24) de sorte que du liquide arrive de la chambre d'entrée (20, 50) dans la chambre de sortie (22, 52), ou pour contrecarrer ainsi temporairement la circulation induite par l'actionnement de la chambre d'entrée (20, 50) vers la chambre de sortie (22, 52).

**2.** Procédé selon la revendication 1, dans lequel le dispositif de soupape est mis en œuvre dans le canal de liaison (24), dans lequel, dans l'état initial, le dispositif de soupape empêche que du liquide arrive de la chambre d'entrée (20) dans la chambre de sortie (22), dans lequel la chambre dont le produit de résistance à la circulation-volume de la ventilation de cette chambre pour le milieu compressible est d'au moins 6700 $\frac{N \cdot s}{m^2}$ est la chambre d'entrée (20), dans lequel est provoquée, lors de l'actionnement, une augmentation de pression du milieu compressible telle que soit provoquée, par un retard d'une compensation de pression dans la chambre d'entrée (20), temporairement une surpression d'au moins 30 Pa dans le milieu compressible dans la chambre d'entrée (20) par rapport au milieu compressible dans la chambre de sortie (22).

**3.** Procédé selon la revendication 2, dans lequel l'actionnement présente le fait de chauffer le milieu compressible à un taux de chauffage de ≥ 0,1 K/s.

4. Procédé selon la revendication 1, dans lequel le dispositif de soupape est mis en oeuvre dans le canal de liaison (24), dans lequel, dans l'état initial, le dispositif de soupape empêche que du liquide arrive de la chambre d'entrée (20) dans la chambre de sortie (22), dans lequel la chambre dont le produit de résistance à la circulation-volume de la ventilation de cette chambre pour le milieu compressible est d'au moins 6700 $\frac{N \cdot s}{m^2}$ est la chambre de sortie (22), dans lequel est provoquée, lors de l'actionnement, une diminution de pression dans le milieu compressible telle que soit provoquée, par un retard de compensation de pression dans la chambre de sortie (22), temporairement une pression négative d'au moins 30 Pa dans le milieu compressible dans la chambre de sortie (22) par rapport au milieu compressible dans la chambre d'entrée (20).

5. Procédé selon la revendication 4, dans lequel l'actionnement présente le fait de refroidir le milieu compressible à un taux de refroidissement de ≥ 0, 1 K/s.

6. Procédé selon la revendication 3 ou la revendication 5, dans lequel le chauffage ou le refroidissement du milieu compressible est provoqué globalement par un chauffage ou un refroidissement de l'air ambiant.

7. Procédé selon la revendication 3 ou la revendication 5, dans lequel le chauffage ou le refroidissement du milieu compressible est provoqué localement dans la chambre d'entrée (20) et/ou la chambre de sortie (22).

8. Procédé selon la revendication 1, dans lequel est temporairement contrecarrée une circulation de la chambre d'entrée (50) vers la chambre de sortie (52) induite par l'actionnement des structures micro-fluidiques, dans lequel la chambre dont le produit de résistance à la circulation-volume de la ventilation de cette chambre pour le milieu compressible est d'au moins 6700 $\frac{N \cdot s}{m^2}$ est la chambre de sortie (52) et dans lequel la différence de pression est provoquée par une compression mécanique du milieu compressible dans la chambre de sortie (52).

9. Procédé selon la revendication 1, dans lequel une circulation de la chambre d'entrée (50) vers la chambre de sortie (52) induite par l'actionnement des structures micro-fluidiques est temporairement contrecarrée, dans lequel la chambre dont le produit de résistance à la circulation-volume de ventilation de cette chambre pour le milieu compressible est d'au moins 6700 $\frac{N \cdot s}{m^2}$ est la chambre d'entrée (50) et dans lequel la différence de pression est provoquée par une décompression mécanique du milieu compressible dans la chambre d'entrée (50).

10. Procédé selon la revendication 8 ou 9, dans lequel l'actionnement présente le fait de soumettre le liquide dans la chambre d'entrée (50) à une force par laquelle le liquide est amené dans le canal de liaison (54), d'où est provoquée une augmentation de pression dans le milieu compressible dans la chambre de sortie (52) par une compression mécanique du milieu compressible dans la chambre de sortie (52) lorsque la chambre de sortie (52) est la chambre dont le produit de résistance à la circulation-volume de la ventilation de cette chambre pour le milieu compressible est d'au moins 6700 $\frac{N \cdot s}{m^2}$, ou bien d'où est provoquée une diminution de pression dans le milieu compressible dans la chambre d'entrée (50) par une décompression mécanique du milieu compressible dans la chambre d'entrée (50) lorsque la chambre d'entrée (50) est l'une parmi la chambre d'entrée (50) et la chambre de sortie (52).

11. Procédé selon la revendication 10, dans lequel la soumission du liquide à une force a lieu par une augmentation d'une fréquence de rotation à laquelle sont entraînées en rotation les structures micro-fluidiques.

12. Procédé selon l'une des revendications 1 à 11, dans lequel la prévision du dispositif de manipulation de fluide présente le fait de prévoir un dispositif de manipulation de fluide dans lequel le produit de résistance à la circulation-volume est un premier produit de résistance à la circulation-volume, dans lequel l'autre parmi la chambre d'entrée (20, 50) et la chambre de sortie (22, 52) présente un canal de ventilation (26, 28, 56, 58) et, donc, un deuxième produit de résistance à la circulation-volume de la ventilation de cette chambre pour le milieu compressible, dans lequel le premier produit de résistance à la circulation-volume est au moins quatre fois supérieur au deuxième produit de résistance à la circulation-volume.

13. Procédé selon l'une des revendications 1 à 12, dans lequel la prévision du dispositif de manipulation de fluide présente le fait de prévoir un dispositif de manipulation de fluide dans lequel les structures micro-fluidiques sont formées dans un module fluidique qui représente un corps de rotation ou qui peut être installé dans un corps de rotation, et qui présente par ailleurs un moyen d'entraînement qui est conçu pour soumettre le module fluidique et, donc, les structures micro-fluidiques à une rotation.

**14.** Procédé selon l'une des revendications 1 à 13, dans lequel la prévision du dispositif de manipulation de fluide présente le fait de prévoir un dispositif de manipulation de fluide dans lequel le canal de liaison (24) présente un siphon ou une soupape capillaire.

FIG 1A

FIG 1B

FIG 2

Phase 1:

f = 5Hz     $\overset{R}{\circ}$

Umgebungsdruck $p_0$

Temperatur z.B. 75°C

20

Luft

Flüssigkeit

Umgebungsdruck $p_0$

Luft   22

FIG 3A

Phase 2: Schalten

f = 5Hz

○ R

Umgebungsdruck $p_0$

Temperatur fällt z.B.
von 75°C→55°C mit 5°C/s

hoher Volumenstrom

20

p2(t)

Flüssigkeit

Umgebungsdruck $p_0$

geringer Volumenstrom

p1(t)

22

p1(t) -p2(t)

t

FIG 3B

Phase 3: Transfer der Flüssigkeit

f = 5Hz

$\overset{R}{\circ}$

Umgebungsdruck $p_0$

Umgebungsdruck $p_0$

FIG 3C

FIG 3D

Phase 1:

R

$p_0$

56

50  Luft

Flüssigkeit

54  $p_0$ ← A

58

B

52  Luft

FIG 4A

Phase 2:

R

f = 5Hz

S1

S2

p1(t)

FIG 4B

FIG 5A

FIG 5B

EP 3 452 217 B1

FIG 6

FIG 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2455162 A1
- DE 202011108189 U
- US 20080149190 A1
- WO 2013045631 A1

**In der Beschreibung aufgeführte Nicht-Patentliteratur**

- **SCHEMBRI, C. T. ; BURD, T. L. ; KOPF-SILL, A. R. ; SHEA, L. R. ; BRAYNIN, B.** Centrifugation and capillarity integrated into a multiple analyte whole blood analyser. *The Journal of Automatic Chemistry,* 1995, vol. 17 (3), 99-104
- **MARK, DANIEL ; METZ, TOBIAS ; HAEBERLE, STEFAN ; LUTZ, SASCHA ; DUCRÉE, JENS ; ZENGERLE, ROLAND ; STETTEN, FELIX.** Centrifugo-pneumatic valve for metering of highly wetting liquids on centrifugal microfluidic platforms. *Lab Chip,* 2009, vol. 9 (24), 3599
- **GORKIN III, ROBERT ; NWANKIRE, CHARLES E. ; GAUGHRAN, JENNIFER ; ZHANG, XIN ; DONO-HOE, GERARD G. ; ROOK, MARTHA et al.** Centrifugo-pneumatic valving utilizing dissolvable films. *Lab Chip,* 2012, vol. 12 (16), 2894
- **SIEGRIST, JONATHAN ; GORKIN, ROBERT ; BASTIEN, MARTINE ; STEWART, GALE ; PEYTAVI, REGIS ; KIDO, HORACIO et al.** Validation of a centrifugal microfluidic sample lysis and homogenization platform for nucleic acid extraction with clinical samples. *Lab Chip,* 2010, vol. 10 (3), 363
- **KINAHAN, D. J. ; KEARNEY, S. M. ; GLYNN, M. T. ; DUCREE, JENS.** *IMBIBITION-MODULATED EVENT-TRIGGERING OF CENTRIFUGO-PNEUMATIC CASCAD-ING FOR MULTI-STAGE DILU-TION SERIES,* 2013

- **UKITA, YOSHIAKI ; ISHIZAWA, MASAKI ; TAKA-MURA, YUZURU ; UTSUMI, YUICHI.** *IN-TERNALLY TRIGGERD MULTISTEP FLOW SEQUENCERS USING CLEPSY-DRA,* 2012
- **AI-FAQHERI, WISAM ; IBRAHIM, FATIMAH ; THIO, TZER HWAI GILBERT ; MOEBIUS, JACOB ; JOSEPH, KARUNAN ; AROF, HAMZAH et al.** Vacuum/Compression Valving (VCV) Using Parrafin-Wax on a Centrifugal Microfluidic CD Platform. *PLoS ONE,* 2013, vol. 8 (3), e58523
- **ABI-SAMRA, KAMEEL ; CLIME, LIVIU ; KONG, LING ; GORKIN, ROBERT ; KIM, TAE-HYEONG ; CHO, YOON-KYOUNG ; MADOU, MARC.** Thermo-pneumatic pumping in centrifugal microfluidic platforms. *Microfluid Nanofluid,* 2011, vol. 11 (5), 643-652
- **M. FOCKE ; F. STUMPF ; G. ROTH ; R. ZENGERLE ; F. VON STETTEN.** Centrifugal microfluidic system for primary amplification and secondary real-time PCR. *Lab Chip,* 2010, vol. 10, 3210-3212
- **M. RICHTER ; P. WOIAS ; D. WEIß.** Microchannels for applications in liquid dosing and flow-rate measurement. *Sensors and Actuators A: Physical,* 1997, vol. 62, 480-483